# EUROPEAN PATENT APPLICATION

(11) **EP 4 810 576 A1**
(43) Date of publication of application: **23.09.2026**
(21) Application number: 24891318.8
(22) Date of filing: 07.11.2024
(51) Int. Cl.: C09D 11/101, B41M 5/00, C09D 4/00, C09D 11/30, D06P 5/30

(54) **ULTRAVIOLET-CURABLE COMPOSITION, METHOD FOR PRODUCING CURED PRODUCT, CURED PRODUCT, ULTRAVIOLET-CURABLE INK, METHOD FOR PRODUCING PRINTED MATTER, AND PRINTED MATTER**

(30) Priority: 17.11.2023 JP 2023195828
(71) Applicant: Mitsubishi Chemical Corporation, Tokyo 100-8251 (JP)
(72) Inventor: MAKINOUCHI, Takahito, Tokyo 100-8251 (JP); INABA, Keisuke, Tokyo 100-8251 (JP); SAKATANI, Shuuhei, Tokyo 100-8251 (JP); SASAKI, Yuusuke, Tokyo 100-8251 (JP); NAKAGAWA, Tomoko, Tokyo 100-8251 (JP); GOROUMARU, Shiho, Tokyo 100-8251 (JP); KASAI, Kengo, Tokyo 100-8251 (JP); XU, Yuqing, Tokyo 100-8251 (JP)
(74) Representative: Hoffmann Eitle
(86) International application number: PCT/JP2024/039583
(87) International publication number: WO 2025/105280

(57) **Abstract**

An ultraviolet-curable composition containing at least a radically polymerizable compound, a polymerization initiator, and a solvent, wherein the radically polymerizable compound is free from an emulsion polymer and is present in the form of particles, the ultraviolet-curable composition further contains resin particles having a urethane skeleton, and the resin particles having a urethane skeleton are free from a polymerizable functional group and have a glass transition temperature of -10°C or lower. An ultraviolet-curable composition containing a radically polymerizable compound, resin particles having a urethane skeleton, a polymerization initiator, a surfactant, and a solvent, wherein the radically polymerizable compound is present in the form of particles, the resin particles having a urethane skeleton are free from a polymerizable functional group and have a glass transition temperature of -10°C or lower, and the ultraviolet-curable composition contains a silicone-based surfactant as the surfactant.

## Description

### Technical Field

The present invention relates to an ultraviolet-curable composition and an ultraviolet-curable ink. The present invention also relates to a cured product produced by curing the ultraviolet-curable composition and to a printed matter produced by curing the ultraviolet-curable ink.

### Background Art

In the fields of inks, adhesives, coating agents, and the like, problems such as air pollution and occupational health and safety during work arise when products containing a large amount of organic solvents are used. One solution to such problems is to use water-based products. However, water-based products may be insufficient in terms of water resistance, solvent resistance, and hardness of the coating film as compared with products that use an organic solvent. A solution to this problem is incorporating a component that is cured by ultraviolet rays into a water-based product to form an ultraviolet-curable composition, and applying the composition, followed by irradiation with ultraviolet rays for curing to form a coating film (e.g., Patent Literatures 1 and 2).

Regarding inks among the above-mentioned products, the demand for inks for inkjet printers, in particular, has been increasing in recent years. Inkjet printers provide features such as ease of full color printing, less noise, the ability to obtain high-resolution images at a low cost, the ability to achieve high-speed printing, the ability to print on a curved surface as well as a flat surface, and the ability to easily print on a large surface area. Therefore, in recent years, inkjet printers have been rapidly growing in popularity not only for personal use, but also as commercial inkjet printers for use in printing signs, window films, posters, car wraps, wallpaper, and the like.

In commercial inkjet printers, the printed matter is required to exhibit characteristics such as (1) high image quality, (2) high coating film properties, (3) high-speed printability, (4) substrate versatility, and (5) environmental and safety properties. In the case of printing a printed matter having a large surface area or a printed matter for outdoor use, a printed film is further required to exhibit excellent coating film performance, such as water resistance, alcohol resistance, coating film strength, and light resistance, for commercial inkjet printers.

Typical printing inks for commercial inkjet printers include water-based inks in which a pigment is dispersed in an aqueous medium; solvent-based UV inks in which a pigment and an ultraviolet-curable monomer are dispersed or dissolved in an organic solvent; solventless UV inks in which a pigment is dispersed in an ultraviolet-curable monomer without a solvent; water-based latex inks in which a pigment and a resin are dispersed in an aqueous medium; and ultraviolet-curable water-based inks in which a pigment and an UV-curable oligomer are dispersed in an aqueous medium (Patent Literatures 1, 2).

Among these, ultraviolet-curable water-based inks exhibit all the above characteristics in a relatively well-balanced manner. However, aqueous inkjet inks suffer from the drawback that heating at a high temperature for a long time is required to fix the ink to a substrate. When the ink is insufficiently fixed to the substrate, for example, in the case of a fabric, the washing fastness is poor, and this causes color loss of a printed matter.

As an aqueous inkjet ink capable of solving the problem of necessity of heating at a high temperature for a long time for fixing the ink, an ink containing a polymerizable compound in the form of particles (resin particles having a polymerizable functional group) has been proposed.

However, the ink compositions proposed in the related art fail to sufficiently improve the washing fastness by short-time heating at a low temperature.

### Citation List

### Patent Literature

Patent Literature 1: JP 2004-209976 A
Patent Literature 2: JP 2013-199110 A

### Summary of Invention

### Technical Problem

An object of the present invention is to provide an ultraviolet-curable composition and an ultraviolet-curable ink that can provide an aqueous inkjet ink capable of producing a printed matter having high washing fastness without requiring heating at a high temperature for a long time to fix the ink to a substrate.

### Solution to Problem

The present inventors have found that an aqueous inkjet ink capable of providing a printed matter having high washing fastness without requiring heating at a high temperature for a long time for fixing the ink can be produced by using resin particles having a polymerizable functional group and resin particles having a urethane skeleton and free from a polymerizable functional group and having a glass transition temperature (Tg) of -10°C or lower in combination.

The gist of the present invention is as follows.
[1] An ultraviolet-curable composition containing at least a radically polymerizable compound, a polymerization initiator, and a solvent, wherein
   the radically polymerizable compound is free from an emulsion polymer and is present in the form of particles,
   the ultraviolet-curable composition further contains resin particles having a urethane skeleton, and
   the resin particles having a urethane skeleton are free from a polymerizable functional group and have a glass transition temperature of -10°C or lower.
[2] An ultraviolet-curable composition containing a radically polymerizable compound, resin particles having a urethane skeleton, a polymerization initiator, a surfactant, and a solvent, wherein
   the radically polymerizable compound is present in the form of particles,
   the resin particles having a urethane skeleton are free from a polymerizable functional group and have a glass transition temperature of -10°C or lower, and
   the ultraviolet-curable composition contains a silicone-based surfactant as the surfactant.
[3] The ultraviolet-curable composition according to [1] or [2], wherein the radically polymerizable compound contains a (meth)acrylate.
[4] The ultraviolet-curable composition according to any of [1] to [3], wherein the content of the resin particles having a urethane skeleton is 0.1 mass% or more and 10 mass% or less relative to the total mass of the ultraviolet-curable composition.
[5] The ultraviolet-curable composition according to any of [1] to [4], wherein the content of the radically polymerizable compound is 5 mass% or more and 20 mass% or less relative to the total mass of the ultraviolet-curable composition.
[6] The ultraviolet-curable composition according to any of [1] to [5], wherein the resin particles having a urethane skeleton have an average particle size of 10 nm or more and 250 nm or less.
[7] The ultraviolet-curable composition according to any of [1] to [6], wherein the radically polymerizable compound has a urethane bond.
[8] The ultraviolet-curable composition according to any of [1] to [7], wherein the solvent contains water.
[9] The ultraviolet-curable composition according to [8], wherein the solvent further contains a water-soluble organic solvent, and a mass ratio of water to the water-soluble organic solvent (water:water-soluble organic solvent) is 1:0.05 to 1:1.5.
[10] The ultraviolet-curable composition according to any of [1] to [9], wherein a concentration of a total solid content other than the solvent is 5 mass% or more and 23 mass% or less.
[11] The ultraviolet-curable composition according to any of [1] to [10], wherein the composition is for an inkjet ink.
[12] A method for producing a cured product, the method including: applying or printing the ultraviolet-curable composition described in any of [1] to [11] onto a surface of a substrate, and then irradiating the substrate with an active energy ray.
[13] A cured product produced by curing the ultraviolet-curable composition described in any of [1] to [11].
[14] An ultraviolet-curable ink containing at least a radically polymerizable compound, a polymerization initiator, a colorant, and a solvent, wherein
   the radically polymerizable compound is free from an emulsion polymer and is present in the form of particles,
   the ultraviolet-curable ink further contains resin particles having a urethane skeleton, and
   the resin particles having a urethane skeleton are free from a polymerizable functional group and have a glass transition temperature of -10°C or lower.
[15] An ultraviolet-curable ink containing a radically polymerizable compound, resin particles having a urethane skeleton, a polymerization initiator, a surfactant, a colorant, and a solvent, wherein
   the radically polymerizable compound is present in the form of particles,
   the resin particles having a urethane skeleton are free from a polymerizable functional group and have a glass transition temperature of -10°C or lower, and
   the ultraviolet-curable ink contains a silicone-based surfactant as the surfactant.
[16] The ultraviolet-curable ink according to [14] or [15], wherein the radically polymerizable compound contains a (meth)acrylate.
[17] The ultraviolet-curable ink according to any of [14] to [16], wherein a content of the resin particles having a urethane skeleton is 0.1 mass% or more and 10 mass% or less relative to the total mass of the ultraviolet-curable ink.
[18] The ultraviolet-curable ink according to any of [14] to [17], wherein a content of the radically polymerizable compound is 5 mass% or more and 20 mass% or less relative to the total mass of the ultraviolet-curable ink.
[19] The ultraviolet-curable ink according to any of [14] to [18], wherein the resin particles having a urethane skeleton have an average particle size of 10 nm or more and 250 nm or less.
[20] The ultraviolet-curable ink according to any of [14] to [19], wherein the radically polymerizable compound has a urethane bond.
[21] The ultraviolet-curable ink according to any of [14] to [20], wherein the solvent contains water.
[22] The ultraviolet-curable ink according to [21], wherein the solvent further contains a water-soluble organic solvent, and a mass ratio of water to the water-soluble organic solvent (water:water-soluble organic solvent) is 1:0.05 to 1:1.5.
[23] The ultraviolet-curable ink according to any of [14] to [22], wherein a concentration of a total solid content other than the solvent is 5 mass% or more and 23 mass% or less.
[24] The ultraviolet-curable ink according to any of [14] to [23], wherein the ink is for inkjet printing.
[25] A method for producing a printed matter, the method including: applying or printing the ultraviolet-curable ink described in any of [14] to [24] onto a surface of a substrate, and then irradiating the substrate with an active energy ray.
[26] A printed matter produced by curing the ultraviolet-curable ink described in any of [14] to [24].

### Advantageous Effects of Invention

The present invention provides an ultraviolet-curable composition and an ultraviolet-curable ink that can provide an aqueous inkjet ink capable of producing a printed matter having high washing fastness without requiring heating at a high temperature for a long time to fix the ink.

### Description of Embodiments

Hereinafter, an embodiment of the present invention will be described. However, the present invention is not limited to this embodiment.

In the present invention, the expression "from X to Y" (where X and Y are any numerals) is intended to encompass "X or more and Y or less" and also "preferably more than X" and "preferably less than Y", unless otherwise specified.

In the present invention, the expression "X or more" (X is any numeral) or "Y or less" (Y is any numeral) is intended to encompass "preferably more than X" or "preferably less than Y".

### Ultraviolet-Curable Composition

The ultraviolet-curable composition according to a first embodiment of the present invention (hereinafter may be referred to as "ultraviolet-curable composition I") contains at least a radically polymerizable compound, a polymerization initiator, and a solvent, wherein the radically polymerizable compound is free from an emulsion polymer and is present in the form of particles, the ultraviolet-curable composition further contains particles of a resin having a urethane skeleton (hereinafter may be referred to as "urethane resin"), and the resin particles having a urethane skeleton are free from a polymerizable functional group and have a glass transition temperature of -10°C or lower.

The ultraviolet-curable composition according to a second embodiment of the present invention (hereinafter may be referred to as "ultraviolet-curable composition II") contains a radically polymerizable compound, resin particles having a urethane skeleton, a polymerization initiator, a surfactant, and a solvent, wherein the radically polymerizable compound is present in the form of particles, the resin particles having a urethane skeleton are free from a polymerizable functional group and have a glass transition temperature of -10°C or lower, and the ultraviolet-curable composition contains a silicone-based surfactant as the surfactant.

Hereinafter, the ultraviolet-curable composition I and the ultraviolet-curable composition II may be collectively referred to as "the ultraviolet-curable composition of the present invention" or "the composition of the present invention".

The usage form of the ultraviolet-curable composition of the present invention is not particularly limited, and the ultraviolet-curable composition can be used as a coating material, an adhesive, a paint, a clear ink, or the like.

The ultraviolet-curable ink (hereinafter may be referred to as "the ultraviolet-curable ink of the present invention" or "the ink of the present invention") may be prepared by adding a colorant described below to the ultraviolet-curable composition of the present invention. The colorant to be added may be one color or two or more colors. By optionally adding colorants of two or more colors, the color of the ink can be adjusted to a desired color.

The ultraviolet-curable ink according to a first embodiment of the present invention (hereinafter may be referred to as "ultraviolet-curable ink I") contains at least a radically polymerizable compound, a polymerization initiator, a colorant, and a solvent, wherein the radically polymerizable compound is free from an emulsion polymer and is present in the form of particles, the ultraviolet-curable ink further contains resin particles having a urethane skeleton, and the resin particles having a urethane skeleton are free from a polymerizable functional group and have a glass transition temperature of -10°C or lower.

The ultraviolet-curable ink according to a second embodiment of the present invention (hereinafter may be referred to as "ultraviolet-curable ink II") contains a radically polymerizable compound, resin particles having a urethane skeleton, a polymerization initiator, a surfactant, a colorant, and a solvent, wherein the radically polymerizable compound is present in the form of particles, the resin particles having a urethane skeleton are free from a polymerizable functional group and have a glass transition temperature of -10°C or lower, and the ultraviolet-curable ink contains a silicone-based surfactant as the surfactant.

Hereinafter, the ultraviolet-curable ink I and the ultraviolet-curable ink II may be collectively referred to as "the ultraviolet-curable ink of the present invention" or "the ink of the present invention".

The ink of the present invention is suitably used for inkjet printing.

The ultraviolet-curable composition and the ultraviolet-curable ink of the present invention are ultraviolet-curable, but the active energy ray used for curing is not limited to ultraviolet light.

The ultraviolet-curable composition and the ultraviolet-curable ink of the present invention may be cured not only by active energy rays but also by heat, for example.

### Mechanism

### Problems of Ink in Related Art

In an ink containing resin particles, the dispersed particles become concentrated as the solvent evaporates after the ink lands on a substrate, causing deformation and fusion of the particles. As a result, interdiffusion of polymer chains occurs between the fused particles, thereby forming a coating film. However, insufficient drying prevents the dispersed particles from becoming concentrated. Even when drying is sufficient, polymer particles having high heat resistance do not undergo deformation. Accordingly, a uniform coating film cannot be formed.

Therefore, an ink in the related art requires high-temperature, long-time heating to form a uniform coating film, and insufficient heating results in failure to form a uniform coating film and to achieve sufficient coating film strength and adhesion to the substrate. As a result, washing fastness of a printed matter was poor.

### Reason for Solving the Above Problem by Adding Urethane Resin Particles Free from Polymerizable Functional Group and a Tg of -10°C or Lower

According to the studies of the present inventors, it has been found that the above problem can be solved by using resin particles having a polymerizable functional group and resin particles having a urethane skeleton free from a polymerizable functional group and having a Tg of -10°C or lower in combination.

Although the reason for this is not clear, it is considered as follows.

Hydrogen bonds formed between the portion of urethane bonds in a urethane resin and functional groups of a substrate such as a fabric (e.g., hydroxyl groups of cellulose in cotton) contribute to improved adhesion between the ink and the surface of a substrate such as a fabric.

In addition, by using urethane resin particles having a Tg of -10°C or lower, most molecular chains of the urethane resin are present in a rubbery state at around normal temperature, thereby exhibiting a relatively mechanically flexible state. Consequently, cracking of the ink coating film on fibers is suppressed.

At the same time, due to the low Tg, the urethane resin particles are considered to be easily fused to each other even at around normal temperature as the solvent dries. Therefore, by curing the ink with ultraviolet light after the ink is applied to a substrate, both fastness imparted by ultraviolet curing and adhesion provided by the urethane resin are achieved. As a result, an ink coating film having high washing fastness can be formed.

### Radically Polymerizable Compound

The presence or absence of ionicity of the radically polymerizable compound used in the present invention is not particularly limited, and the radically polymerizable compound may be nonionic or ionic (anionic, cationic, or amphoteric). When the radically polymerizable compound used in the present invention has the same ionicity as that of the other materials or is nonionic, aggregation with the other materials is suppressed, and the storage stability of the ultraviolet-curable composition or the ultraviolet-curable ink can be enhanced.

Here, the term nonionic means that, for example, the hydrophilic group of the radically polymerizable compound is composed of an ether bond or a hydroxyl group that is not ionically dissociated in water. The term ionic (anionic, cationic, or amphoteric) means, for example, that the radically polymerizable compound has a carboxyl group or an amino group that can be ionically dissociated in water. More specifically, examples of radically polymerizable anionic compounds include radically polymerizable compounds containing a carboxyl group.

The radically polymerizable compound is not particularly limited as long as it has one or more radically polymerizable groups in the molecule. The number of radically polymerizable groups in the molecule is preferably 2 or more and more preferably 3 or more, and is preferably 15 or less.

Examples of the radically polymerizable group contained in the radically polymerizable compound include a (meth)acryloyl group, a vinyl group, and a vinyl ether group. Among these, a (meth)acryloyl group is preferable from the viewpoint of ease of radical polymerization.

That is, the radically polymerizable compound used in the present invention preferably contains a (meth)acrylate described below. When the radically polymerizable compound used in the present invention contains a (meth)acrylate, a higher effect in washing fastness is achieved in combination with urethane resin particles described below.

In the present invention, the term "(meth)acrylate" means acrylate or methacrylate. The same applies to the term "(meth)acryloyl".

One type of radically polymerizable compound may be used alone, or two or more types thereof may be used in combination.

As the radically polymerizable compound, the radically polymerizable group-containing compound having one (meth)acryloyl group in the molecule is not particularly limited. Examples of the radically polymerizable compound include isoamyl (meth)acrylate, stearyl (meth)acrylate, lauryl (meth)acrylate, octyl (meth)acrylate, decyl (meth)acrylate, isomyristyl (meth)acrylate, isostearyl (meth)acrylate, 2-ethylhexyl-diglycol (meth)acrylate, 2-hydroxybutyl (meth)acrylate, butoxyethyl (meth)acrylate, ethoxydiethylene glycol (meth)acrylate, methoxydiethylene glycol (meth)acrylate, methoxypolyethylene glycol (meth)acrylate, methoxypropylene glycol (meth)acrylate, phenoxyethyl (meth)acrylate, tetrahydrofurfuryl (meth)acrylate, isobornyl (meth)acrylate, 2-hydroxyethyl (meth)acrylate, 2-hydroxypropyl (meth)acrylate, 2-hydroxy-3-phenoxypropyl (meth)acrylate, lactone-modified flexible (meth)acrylate, t-butylcyclohexyl (meth)acrylate, dicyclopentenyl (meth)acrylate, dicyclopentenyloxyethyl (meth)acrylate, and glycidyl (meth)acrylate.

As the radically polymerizable compound, the radically polymerizable group-containing compound having two (meth)acryloyl groups in the molecule is not particularly limited. Examples the radically polymerizable compound include triethylene glycol di(meth)acrylate, tetraethylene glycol di(meth)acrylate, polyethylene glycol di(meth)acrylate, tripropylene glycol di(meth)acrylate, polypropylene glycol di(meth)acrylate, 1,4-butanediol di(meth)acrylate, 1,6-hexanediol di(meth)acrylate, 1,9-nonanediol di(meth)acrylate, neopentyl glycol di(meth)acrylate, dimethylol-tricyclodecane di(meth)acrylate, ethylene oxide (EO) adduct di(meth)acrylate of bisphenol A, propylene oxide (PO) adduct di(meth)acrylate of bisphenol A, hydroxypivalic acid neopentyl glycol di(meth)acrylate, and polytetramethylene glycol di(meth)acrylate.

As the radically polymerizable compound, the radically polymerizable group-containing compound having three or more (meth)acryloyl groups in the molecule is not particularly limited. Examples of the radically polymerizable compound include trimethylolpropane tri(meth)acrylate, ethylene oxide-modified trimethylolpropane tri(meth)acrylate, propylene oxide-modified trimethylolpropane tri(meth)acrylate, pentaerythritol tri(meth)acrylate, pentaerythritol tetra(meth)acrylate, dipentaerythritol penta(meth)acrylate, dipentaerythritol hexa(meth)acrylate, ditrimethylolpropane tetra(meth)acrylate, glycerol tri(meth)acrylate, glycerin ethoxy tri(meth)acrylate, glycerin propoxy tri(meth)acrylate, caprolactone-modified trimethylolpropane tri(meth)acrylate, pentaerythritol ethoxy tetra(meth)acrylate, epichlorohydrin-modified trimethylolpropane tri(meth)acrylate, tripentaerythritol octa(meth)acrylate, tetrapentaerythritol deca(meth)acrylate, polypentaerythritol poly(meth)acrylate, and caprolactone-modified dipentaerythritol hexa(meth)acrylate.

As the radically polymerizable compound, an oligomer or polymer having one or more radically polymerizable groups in the molecule can also be used. Among these, an oligomer or polymer having one or more (meth)acryloyl groups in the molecule is preferable. The oligomer or polymer having one or more (meth)acryloyl groups in the molecule is not particularly limited. Examples of the oligomer or polymer include polyester (meth)acrylate, urethane (meth)acrylate, epoxy (meth)acrylate, acrylic resin (meth)acrylate, polyether (meth)acrylate, oligo (meth)acrylate, alkyd (meth)acrylate, and polyol (meth)acrylate.

The radically polymerizable compound used in the present invention is present in the form of particles in the ultraviolet-curable composition or the ultraviolet-curable ink.

In the present invention, the expression "present in the form of particles" means that when the particle size distribution is measured by the dynamic light scattering method using a particle size analyzer (e.g., NANOTRAC WAVEII, available from MicrotracBEL Corp.), a peak is observed in a region where the particle size is more than 1 nm. In the present invention, as long as the radically polymerizable compound is present in the form of particles, the state of being "present in the form of particles" is satisfied both in a case in which the radically polymerizable compound is aggregated and in a case in which the radically polymerizable compound contains other substances in the particles.

When the radically polymerizable compound is present in the form of particles in the ultraviolet-curable composition or the ultraviolet-curable ink, the ink can remain near the surface without excessively penetrating into the substrate, even when the substrate is a water-absorbing substrate such as a fabric. As a result, a cured product or printed matter can be formed which suppresses a decrease in image density and exhibits excellent various resistance properties, such as water resistance and abrasion resistance.

The radically polymerizable compound used in the present invention is preferably water-insoluble. Here, the term "water-insoluble" means that the solubility of the polymerizable compound in water at 25°C is less than 0.1 g/mL. The solubility in water can be adjusted by the type and content of hydrophilic functional groups of the radically polymerizable compound.

The water-insoluble radically polymerizable compound may be present in the form of particles in an aqueous medium.

Since the radically polymerizable compound is stably present in the form of particles, an amphiphilic radically polymerizable compound may be used as the radically polymerizable compound. The amphiphilic radically polymerizable compound is not particularly limited as long as it is a compound having a radically polymerizable group and a hydrophilic group. Examples of the amphiphilic radically polymerizable compound include a macromonomer or urethane (meth)acrylate having a (meth)acryloyl group or a vinyl ether group as a radically polymerizable group and a polyalkylene glycol or an ionic group as a hydrophilic group, and a compound produced by reacting a polyisocyanate compound (A) described below, the following compound (B'), and the following compound (C').
Compound (B'): A compound that contains a polymerizable unsaturated bond and can bond to the polyisocyanate compound (A)
Compound (C'): A water-soluble compound that can bond to the polyisocyanate compound (A)

The compound produced by reacting the polyisocyanate compound (A), the compound (B'), and the compound (C') will be described in more detail below.

Examples of the structure of the compound (B') capable of bonding to the polyisocyanate compound (A) include a hydroxyl group, a carboxyl group, and an amino group. Examples of the polymerizable unsaturated bond include a carbon-carbon double bond and a carbon-carbon triple bond, and among these, a carbon-carbon double bond is preferable. More specific examples thereof include carbon-carbon double bonds derived from a vinyl group, a (meth)acryloyl group, and the like.

The water-soluble compound of the compound (C') includes a water-soluble polymer. Specific examples of the compound (C') include polyglycerin, polyhydroxy (meth)acrylate, polyamine, quaternary aminated polystyrene, sulfonated polystyrene, polyether, polyalkylene glycol, and the like. Among these, polyglycerin, polyhydroxy (meth)acrylate, and polyalkylene glycol are preferable, and polyalkylene glycol is particularly preferable. Each of these water-soluble compounds may be a copolymer. The compound (C') has a structure of such a water-soluble compound and a structure that can bond to the polyisocyanate compound (A). Here, the "structure that can bond to the polyisocyanate compound (A)" is the same as that of the above-mentioned compound (B').

The polyisocyanate compound (A), the compound (B'), and the compound (C') may additionally have other structures.

### Polyisocyanate Compound (A)

The polyisocyanate compound (A) is a compound having a total of two or more isocyanate groups in one molecule.

The type of the polyisocyanate compound (A) is not particularly limited, and examples thereof include chain aliphatic polyisocyanates, aromatic polyisocyanates, and alicyclic polyisocyanates. Among these, the polyisocyanate compound (A) preferably includes a trimer compound of polyisocyanate from the viewpoint of weather resistance and hardness.

The chain aliphatic polyisocyanate is a compound having a chain aliphatic structure and two or more isocyanate groups. The chain aliphatic polyisocyanate is preferable from the viewpoint of weather resistance and stretchability. The chain aliphatic structure in the chain aliphatic polyisocyanate is not particularly limited, but is preferably a linear or branched alkylene group having 1 or more and 12 or less carbons and preferably 1 or more and 6 or less carbons. Examples of the chain aliphatic polyisocyanate include aliphatic diisocyanates such as tetramethylene diisocyanate, hexamethylene diisocyanate, trimethylhexamethylene diisocyanate, and dimer acid diisocyanate, or trimer compounds of these polyisocyanates.

The aromatic polyisocyanate is a compound having an aromatic structure and two or more isocyanate groups. The aromatic polyisocyanate is preferable from the viewpoint of the strength of the cured product. The aromatic structure of the aromatic polyisocyanate is not particularly limited, but is preferably an aromatic structure having 6 or more and 13 or less carbons. Examples of the aromatic polyisocyanate include aromatic diisocyanates such as tolylene diisocyanate, xylylene diisocyanate, diphenylmethane diisocyanate, m-phenylene diisocyanate, and naphthalene diisocyanate, and trimer compounds of these polyisocyanates.

The alicyclic polyisocyanate is a compound having an alicyclic structure and two or more isocyanate groups. The alicyclic structure in the alicyclic polyisocyanate is not particularly limited, but the number of carbons thereof is usually 5 or more and preferably 6 or more, and is usually 15 or less, preferably 14 or less, and more preferably 13 or less. The alicyclic structure is particularly preferably a cycloalkylene group. Examples of the alicyclic polyisocyanate include diisocyanates having an alicyclic structure, such as bis(isocyanatomethyl)cyclohexane, cyclohexane diisocyanate, bis(isocyanatocyclohexyl)methane, and isophorone diisocyanate, or trimer compounds of these polyisocyanates.

A single type of these polyisocyanate compounds (A) may be used alone, or two or more types thereof may be used in combination.

As the polyisocyanate compound (A), a polyisocyanate having two or more structures among a chain aliphatic structure, an aromatic structure, and an alicyclic structure can also be used.

The polyisocyanate compound (A) preferably has 3 or more isocyanate groups, and preferably has 6 or less isocyanate groups, particularly from the viewpoint of adhesion to a substrate. The polyisocyanate compound (A) is preferably a trimer obtained by a trimerization reaction of hexamethylene diisocyanate, trimethylhexamethylene diisocyanate, phenylene diisocyanate, or the like, and is particularly preferably a trimer of hexamethylene diisocyanate.

### Compound (B')

The compound (B') is a compound that contains a polymerizable unsaturated bond and can bond to the polyisocyanate compound (A).

The compound (B') is preferably a hydroxyl group-containing (meth)acrylate because such a compound exhibits excellent properties such as ultraviolet curability, fixability, water dispersion stability, and solvent resistance. When the compound (B') is a hydroxyl group-containing (meth)acrylate, the urethane bond can be formed by the reaction between the hydroxyl group of the hydroxyl group-containing (meth)acrylate and the isocyanate group of the polyisocyanate compound (A). Furthermore, the hydroxyl group-containing (meth)acrylate is preferably a hydroxyl group-containing polyfunctional (meth)acrylate (B) because such a compound forms a favorable crosslinked structure, and the physical properties of the cured product such as stain resistance and abrasion resistance are good.

The number of hydroxyl groups in the hydroxyl group-containing (meth)acrylate is preferably 3 or less, more preferably 2 or less, and even more preferably 1.

The upper limit of the number of (meth)acryloyl groups in the hydroxyl group-containing polyfunctional (meth)acrylate (B) is preferably 8 or less, and more preferably 6 or less. Meanwhile, the lower limit is preferably 2 or more, and more preferably 3 or more.

Examples of the hydroxyl group-containing polyfunctional (meth)acrylate (B) include pentaerythritol tri(meth)acrylate, dipentaerythritol penta(meth)acrylate, caprolactone-modified dipentaerythritol penta(meth)acrylate, caprolactone-modified pentaerythritol tri(meth)acrylate, ethylene oxide-modified dipentaerythritol penta(meth)acrylate, ethylene oxide-modified pentaerythritol tri(meth)acrylate, 2-hydroxy-1,3-dimethacryloxypropane, and 2-hydroxy-3-acryloyloxypropyl methacrylate.

A single type of hydroxyl group-containing polyfunctional (meth)acrylate (B) may be used alone, or two or more types thereof may be used in combination.

In particular, from the viewpoint of the strength of the cured product to be produced, the hydroxyl group-containing polyfunctional (meth)acrylate (B) is preferably those having one hydroxyl group and 3 or more and 5 or less (meth)acryloyl groups, such as dipentaerythritol penta(meth)acrylate and pentaerythritol tri(meth)acrylate. Dipentaerythritol penta(meth)acrylate is particularly preferable as the hydroxyl group-containing polyfunctional (meth)acrylate (B), because a favorable crosslinked structure is formed, and the mechanical strength of the cured film is increased.

### Compound (C')

The compound (C') is a water-soluble compound that can bond to the polyisocyanate compound (A).

As described above, examples of the compound (C') include water-soluble polymers, and among these, a polyalkylene glycol (C) is particularly preferable. A urethane bond can be formed by the reaction between the hydroxyl group of the polyalkylene glycol (C) and the isocyanate group of the polyisocyanate compound (A).

The polyalkylene glycol (C) is not limited, but a mono-substituted structure is preferable. That is, one hydroxyl group of the glycol is preferably substituted. The substituted structure is preferably a structure that does not bond to isocyanate.

The polyalkylene glycol (C) may be a mixture of a compound having a mono-substituted structure and a compound not having a mono-substituted structure.

The molecular weight of the polyalkylene glycol (C) (meaning the number average molecular weight when the polyalkylene glycol (C) is not a single compound) is not limited, but is usually 100 or more, and preferably 200 or more, and is usually 5000 or less, and preferably 2000 or less.

Among the polyalkylene glycols (C), polyalkylene glycol mono-substituted ethers are preferable. Among the polyalkylene glycol mono-substituted ethers, a polyalkylene glycol mono-substituted ether not containing an ionic substituent in the ether moiety is more preferable. As the polyalkylene glycols (C), for example, a compound represented by Formula (1) below is even more preferred. 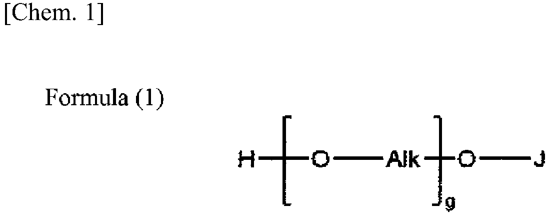 In Formula (1), Alk is an alkylene group, and J is any of an alkyl group, a (meth)acryloyl group, an allyl group, an acyl group, and a hydrogen atom. g is an integer of 2 or more.

Alk in Formula (1) is preferably an alkylene group having 1 or more and 3 or less carbons, and among these alkylene groups, Alk is more preferably an ethylene group, a trimethylene group, or a propylene group, and is even more preferably an ethylene group from the viewpoint of storage stability.

From the viewpoint of the strength of the cured product, J is preferably a (meth)acryloyl group, an allyl group, or an acyl group, and is more preferably an allyl group.

From the viewpoint of the strength of the cured product produced, g in Formula (1) is usually 2 or more, preferably 5 or more, and more preferably 6 or more, and is usually 500 or less, preferably 100 or less, and more preferably 50 or less.

A single type of these polyalkylene glycols (C) may be used alone, or two or more types thereof may be used in combination. The polyalkylene glycol (C) may be a mixture of polyalkylene glycols having different molecular weights (compounds having different values of g in Formula (1)).

In order for the radically polymerizable compound to be stably present in the form of particles in the composition of the present invention or the ink of the present invention, the radically polymerizable compound is preferably free from a structure obtained by reacting the following compound (D) and the following compound (E).
Compound (D): A tertiary amine, a salt thereof, or a quaternary ammonium salt
Compound (E): A compound containing a polymerizable unsaturated bond and a glycidyl group

### Weight Average Molecular Weight

From the viewpoint of the performance and handling properties of the cured product, in a case in which the radically polymerizable compound is a polymer, the weight average molecular weight calibrated with polystyrene as determined by gel permeation chromatography (GPC) is preferably 1000 or more, and more preferably 2000 or more, and is preferably 100000 or less, and more preferably 50000 or less. However, in the case of a commercially available product, a catalog value can be adopted.

### Average Particle Size

In the ultraviolet-curable composition and the ultraviolet-curable ink of the present invention, the radically polymerizable compound is present in the form of particles. The particles preferably have an average particle size of 10 nm or more and 250 nm or less, more preferably 20 nm or more and 200 nm or less. When the average particle size of the radically polymerizable compound is within the above range, the dispersion stability is good.

The average particle size of the radically polymerizable compound is, for example, a volume average particle size (D₅₀) measured by a particle size measuring device based on the dynamic light scattering method.

In the examples described below, the average particle size of the radically polymerizable compound particles in an aqueous dispersion of the radically polymerizable compound is measured, but the average particle size of the radically polymerizable compound particles in the aqueous dispersion is substantially equal to the average particle size of the radically polymerizable compound particles in the ultraviolet-curable composition and the ultraviolet-curable ink.

The average particle size of the radically polymerizable compound means the particle size (primary particle size) of the radically polymerizable compound particles.

### Resin Particles Having Urethane Skeleton

The ultraviolet-curable composition and the ultraviolet-curable ink of the present invention contain resin particles having a urethane skeleton (urethane resin particles). The urethane resin particles are free from a polymerizable functional group and have a glass transition temperature (Tg) of -10°C or lower.

The glass transition temperature (Tg) of the urethane resin particles is preferably -20°C or lower, more preferably -30°C or lower, still more preferably -40°C or lower, particularly preferably -50°C or lower, from the viewpoint of improving adhesion of the ink coating film by the urethane resin.

Meanwhile, the lower limit of the Tg of the urethane resin particles is usually -100°C or higher, and preferably -80°C or higher, from the viewpoint of liquid stability.

The Tg of the urethane resin particles can be measured by a method described in Examples below. Specifically, in a graph of heat flow versus temperature obtained by differential scanning calorimetry (DSC), Tg is defined as the temperature at which the slope of the curve corresponding to the stepwise change observed during the second heating run reaches its maximum. The stepwise change refers to a portion of the DSC curve extending from the point where the curve departs from a baseline on the low-temperature side to the point where it transitions to a new baseline on the high-temperature side.

The urethane resin particles preferably have an average particle size of 10 nm or more and 250 nm or less, more preferably 20 nm or more and 200 nm or less. The urethane resin particles with an average particle size within the above range provide good dispersion stability.

Here, the average particle size of the urethane resin particles is, for example, a volume average particle size (D₅₀) measured with a particle size measuring device by a dynamic light scattering method. However, in the case of a commercially available product, a catalog value can be adopted.

The average particle size of the urethane resin particles means particle size (primary particle size) of the urethane resin particles.

The ionicity of the urethane resin particles may be nonionic, anionic, or cationic. Among these, the ionicity of the urethane resin particles is preferably nonionic or anionic.

As the urethane resin particles, a commercially available aqueous dispersion of urethane resin particles can be used. Examples of commercially available urethane resin particles suitable for the present invention include Takelac (trade name) W-6110 and Takelac (trade name) WS-6021 (available from Mitsui Chemicals, Inc.), DISPERCOLL (trade name) U53, DISPERCOLL (trade name) U56, DISPERCOLL (trade name) U8755, IMPRANIL (trade name) DL3040, IMPRANIL (trade name) DLI, NeoRez (trade name) R- 600 (available from Sumika Covestro Urethane Co., Ltd.), Superflex (trade name) 300, Superflex (trade name) 460, Superflex (trade name) 500M, Superflex (trade name) E-2000 (available from DKS Co., Ltd.), DAOTAN (trade name) TW 6450/30WA (available from Daicel-Allnex Ltd.), Eternacoll (trade name) UW-5002E (available from UBE Corporation), Adeka Bontiter (trade name) HUX 370, Adeka Bontiter (trade name) HUX 564, and Adeka Bontiter (trade name) HUX 567 (available from ADEKA Corporation). However, the urethane resin particles that can be used in the present invention are not limited to the above.

One type of these urethane resin particles may be used alone, or two or more types thereof may be used in combination.

### Colorant

The ultraviolet-curable ink of the present invention contains a colorant.

As the colorant used in the ultraviolet-curable ink of the present invention, various dyes or pigments known as colorants and used in inks can be used. From the viewpoint of irradiation with ultraviolet light and long-term storage durability of printed images, a pigment is preferably used as the colorant.

### Dye

The dye that can be used in the present invention is not particularly limited, and examples thereof include water-soluble dyes such as acid dyes, direct dyes, and reactive dyes, as well as disperse dyes. Among these, anionic dyes are preferable.

### Water-Soluble Dye

Examples of the water-soluble dye include azo dyes, methine dyes, azomethine dyes, xanthene dyes, quinone dyes, phthalocyanine dyes, triphenylmethane dyes, and diphenylmethane dyes. Specific compounds thereof are exemplified below, but the water-soluble dye is not limited to these exemplified compounds.

C.I. Acid Yellow
   1, 3, 11, 17, 18, 19, 23, 25, 36, 38, 40, 42, 44, 49, 59, 61, 65, 67, 72, 73, 79, 99, 104, 110, 114, 116, 118, 121, 127, 129, 135, 137, 141, 143, 151, 155, 158, 159, 169, 176, 184, 193, 200, 204, 207, 215, 219, 220, 230, 232, 235, 241, 242, 246
C.I. Acid Orange
   3, 7, 8, 10, 19, 24, 51, 56, 67, 74, 80, 86, 87, 88, 89, 94, 95, 107, 108, 116, 122, 127, 140, 142, 144, 149, 152, 156, 162, 166, 168
C.I. Acid Red
   88, 97, 106, 111, 114, 118, 119, 127, 131, 138, 143, 145, 151, 183, 195, 198, 211, 215, 217, 225, 226, 249, 251, 254, 256, 257, 260, 261, 265, 266, 274, 276, 277, 289, 296, 299, 315, 318, 336, 337, 357, 359, 361, 362, 364, 366, 399, 407, 415
C.I. Acid Violet
   17, 19, 21, 42, 43, 47, 48, 49, 54, 66, 78, 90, 97, 102, 109, 126
C.I. Acid Blue
   1, 7, 9, 15, 23, 25, 40, 62, 72, 74, 80, 83, 90, 92, 103, 104, 112, 113, 114, 120, 127, 128, 129, 138, 140, 142, 156, 158, 171, 182, 185, 193, 199, 201, 203, 204, 205, 207, 209, 220, 221, 224, 225, 229, 230, 239, 249, 258, 260, 264, 278, 279, 280, 284, 290, 296, 298, 300, 317, 324, 333, 335, 338, 342, 350
C.I. Acid Green
   9, 12, 16, 19, 20, 25, 27, 28, 40, 43, 56, 73, 81, 84, 104, 108, 109
C.I. Acid Brown
   2, 4, 13, 14, 19, 28, 44, 123, 224, 226, 227, 248, 282, 283, 289, 294, 297, 298, 301, 355, 357, 413
C.I. Acid Black
   1, 2, 3, 24, 26, 31, 50, 52, 58, 60, 63, 107, 109, 112, 119, 132, 140, 155, 172, 187, 188, 194, 207, 222
C.I. Direct Yellow
   8, 9, 10, 11, 12, 22, 27, 28, 39, 44, 50, 58, 79, 86, 87, 98, 105, 106, 130, 132, 137, 142, 147, 153
C.I. Direct Orange
   6, 26, 27, 34, 39, 40, 46, 102, 105, 107, 118
C.I. Direct Red
   2, 4, 9, 23, 24, 31, 54, 62, 69, 79, 80, 81, 83, 84, 89, 95, 212, 224, 225, 226, 227, 239, 242, 243, 254
C.I. Direct Violet
   9, 35, 51, 66, 94, 95
C.I. Direct Blue
   1, 15, 71, 76, 77, 78, 80, 86, 87, 90, 98, 106, 108, 160, 168, 189, 192, 193, 199, 200, 201, 202, 203, 218, 225, 229, 237, 244, 248, 251, 270, 273, 274, 290, 291
C.I. Direct Green
   26, 28, 59, 80, 85
C.I. Direct Brown
   44, 106, 115, 195, 209, 210, 222, 223
C.I. Direct Black
   17, 19, 22, 32, 51, 62, 108, 112, 113, 117, 118, 132, 146, 154, 159, 169
C.I. Basic Yellow
   1, 2, 11, 13, 15, 19, 21, 28, 29, 32, 36, 40, 41, 45, 51, 63, 67, 70, 73, 91
C.I. Basic Orange
   2, 21, 22
C.I. Basic Red
   1, 2, 12, 13, 14, 15, 18, 23, 24, 27, 29, 35, 36, 39, 46, 51, 52, 69, 70, 73, 82, 109
C.I. Basic Violet
   1, 3, 7, 10, 11, 15, 16, 21, 27, 39
C.I. Basic Blue
   1, 3, 7, 9, 21, 22, 26, 41, 45, 47, 52, 54, 65, 69, 75, 77, 92, 100, 105, 117, 124, 129, 147, 151
C.I. Basic Green
   1, 4
C.I. Basic Brown
   1
C.I. Reactive Yellow
   2, 3, 7, 15, 17, 18, 22, 23, 24, 25, 27, 37, 39, 42, 57, 69, 76, 81, 84, 85, 86, 87, 92, 95, 102, 105, 111, 125, 135, 136, 137, 142, 143, 145, 151, 160, 161, 165, 167, 168, 175, 176
C.I. Reactive Orange
   1, 4, 5, 7, 11, 12, 13, 15, 16, 20, 30, 35, 56, 64, 67, 69, 70, 72, 74, 82, 84, 86, 87, 91, 92, 93, 95, 107
C.I. Reactive Red
   2, 3, 5, 8, 11, 21, 22, 23, 24, 28, 29, 31, 33, 35, 43, 45, 49, 55, 56, 58, 65, 66, 78, 83, 84, 106, 111, 112, 113, 114, 116, 120, 123, 124, 128, 130, 136, 141, 147, 158, 159, 171, 174, 180, 183, 184, 187, 190, 193, 194, 195, 198, 218, 220, 222, 223, 228, 235
C.I. Reactive Violet
   1, 2, 4, 5, 6, 22, 23, 33, 36, 38
C.I. Reactive Blue
   2, 3, 4, 5, 7, 13, 14, 15, 19, 21, 25, 27, 28, 29, 38, 39, 41, 49, 50, 52, 63, 69, 71, 72, 77, 79, 89, 104, 109, 112, 113, 114, 116, 119, 120, 122, 137, 140, 143, 147, 160, 161, 162, 163, 168, 171, 176, 182, 184, 191, 194, 195, 198, 203, 204, 207, 209, 211, 214, 220, 221, 222, 231, 235, 236
C.I. Reactive Green
   8, 12, 15, 19, 21
C.I. Reactive Brown
   2, 7, 9, 10, 11, 17, 18, 19, 21, 23, 31, 37, 43, 46
C.I. Reactive Black
   5, 8, 13, 14, 31, 34, 39
C.I. Food Black
   1, 2

### Pigment

As the pigment, organic and inorganic pigments known in the related art can be used.

Examples of the pigment include azo pigments, such as azo lake, insoluble azo pigments, condensed azo pigments, and chelate azo pigments; polycyclic pigments, such as phthalocyanine pigments, perylene and perylene pigments, anthraquinone pigments, quinacridone pigments, dioxazine pigments, thioindigo pigments, isoindolinone pigments, and quinophthalone pigments; dye lakes, such as basic dye lakes and acid dye lakes; organic pigments, such as nitro pigments, nitroso pigments, aniline black, and daylight fluorescent pigments; and inorganic pigments, such as carbon black, titanium oxide, and iron oxide-based pigments. As the pigment, an anionic pigment is preferable.

### Organic Pigment

Specific examples of the organic pigment are described below.

### Magenta or Red Pigment

C.I. Pigment Red 2, C.I. Pigment Red 3, C.I. Pigment Red 5, C.I. Pigment Red 6, C.I. Pigment Red 7, C.I. Pigment Red 15, C.I. Pigment Red 16, C.I. Pigment Red 48:1, C.I. Pigment Red 53:1, C.I. Pigment Red 57:1, C.I. Pigment Red 122, C.I. Pigment Red 123, C.I. Pigment Red 139, C.I. Pigment Red 144, C.I. Pigment Red 149, C.I. Pigment Red 166, C.I. Pigment Red 177, C.I. Pigment Red 178, C.I. Pigment Red 222, and the like

### Orange or Yellow Pigment

C.I. Pigment Orange 31, C.I. Pigment Orange 43, C.I. Pigment Yellow 12, C.I. Pigment Yellow 13, C.I. Pigment Yellow 14, C.I. Pigment Yellow 15, C.I. Pigment Yellow 17, C.I. Pigment Yellow 74, C.I. Pigment Yellow 93, C.I. Pigment Yellow 94, C.I. Pigment Yellow 128, C.I. Pigment Yellow 138, C.I. Pigment Yellow 155, and the like

### Green or Cyan Pigment

C.I. Pigment Blue 15, C.I. Pigment Blue 15:2, C.I. Pigment Blue 15:3, C.I. Pigment Blue 16, C.I. Pigment Blue 60, C.I. Pigment Green 7, and the like

A single type of these dyes and pigments may be used alone, or two or more types thereof may be used in combination.

### Solvent

The ultraviolet-curable composition and the ultraviolet-curable ink of the present invention contain a solvent. The solvent preferably contains water, and more preferably further contains a water-soluble organic solvent.

That is, the solvent used in the present invention is more preferably a mixture of water and a water-soluble organic solvent.

The water-soluble organic solvent includes those that function as a moisture-retention solvent for enhancing moisture retention and wettability, and those that are used as an aqueous medium to adjust viscosity and improve handling properties and ejection properties in inkjet printing. These two types are not clearly distinguished from each other, and the water-soluble organic solvent used as a moisture-retention solvent also functions as a solvent.

In the present invention, the water-soluble organic solvent refers to a compound soluble in water. The solubility of the water-soluble organic solvent in water is not limited, but a compound that can be dissolved in water at any proportion is preferred. Even a compound that is unlikely to have the characteristics of a solvent by itself (e.g., a compound that is a solid or has a high viscosity at an ordinary temperature) is included in the scope of water-soluble organic solvent as long as the compound can be used as a solvent by being uniformly mixed with water.

Examples of the water-soluble organic solvent include polyhydric alcohols; ethers such as polyhydric alcohol alkyl ethers and polyhydric alcohol aryl ethers; nitrogen-containing heterocyclic compounds; amides; amines; and sulfur-containing compounds.

Specific examples of the water-soluble organic solvent include polyhydric alcohols such as ethylene glycol, diethylene glycol, 1,2-propanediol (propylene glycol), 1,3-propanediol, 1,2-butanediol, 1,3-butanediol, 1,4-butanediol, 2,3-butanediol, 3-methyl-1,3-butanediol, triethylene glycol, polyethylene glycol, polypropylene glycol, 1,2-pentanediol, 1,3-pentanediol, 1,4-pentanediol, 2,4-pentanediol, 1,5-pentanediol, 1,2-hexanediol, 1,6-hexanediol, 1,3-hexanediol, 2,5-hexanediol, 1,5-hexanediol, glycerin, 1,2,6-hexanetriol, 2-ethyl-1,3-hexanediol, ethyl-1,2,4-butanetriol, 1,2,3-butanetriol, 2,2,4-trimethyl-1,3-pentanediol, and petriol; polyhydric alcohol alkyl ethers such as ethylene glycol monoethyl ether, ethylene glycol monobutyl ether, diethylene glycol monomethyl ether, diethylene glycol monoethyl ether, diethylene glycol ethyl methyl ether, diethylene glycol monobutyl ether, tetraethylene glycol monomethyl ether, propylene glycol monomethyl ether, and propylene glycol monoethyl ether; polyhydric alcohol aryl ethers such as ethylene glycol monophenyl ether and ethylene glycol monobenzyl ether; nitrogen-containing heterocyclic compounds such as 2-pyrrolidone, N-methyl-2-pyrrolidone, N-hydroxyethyl-2-pyrrolidone, 1,3-dimethyl-2-imidazolidinone, ε-caprolactam, and γ-butyrolactone; amides such as formamide, N-methylformamide, N,N-dimethylformamide, 3-methoxy-N,N-dimethylpropionamide, and 3-butoxy-N,N-dimethylpropionamide; amines such as monoethanolamine, diethanolamine, and triethylamine; sulfur-containing compounds such as dimethyl sulfoxide, sulfolane, and thiodiethanol; propylene carbonate, and ethylene carbonate.

Among these, propylene glycol and diethylene glycol ethyl methyl ether are preferable.

As the water-soluble organic solvent, an organic solvent having a boiling point of 250°C or lower is preferably used because not only does such an organic solvent function as a moisture-retention solvent but good drying properties are also achieved.

As the water-soluble organic solvent, a glycol ether compound and a polyol compound having 8 or more carbons are also suitably used.

Specific examples of the polyol compound having 8 or more carbons include 2-ethyl-1,3-hexanediol and 2,2,4-trimethyl-1,3-pentanediol.

Specific examples of the glycol ether compound include polyhydric alcohol alkyl ethers such as ethylene glycol monoethyl ether, ethylene glycol monobutyl ether, diethylene glycol monomethyl ether, diethylene glycol monoethyl ether, diethylene glycol monobutyl ether, diethylene glycol monoisobutyl ether, tetraethylene glycol monomethyl ether, and propylene glycol monoethyl ether; and polyhydric alcohol aryl ethers such as ethylene glycol monophenyl ether and ethylene glycol monobenzyl ether.

A single type of these water-soluble organic solvents may be used alone, or two or more types thereof may be used in combination.

### Polymerization Initiator

The polymerization initiator used in the present invention is preferably a photoradical polymerization initiator which, in response to the energy of light (ultraviolet light) received by irradiation with ultraviolet light, generates radicals, which are active species, and initiates photopolymerization of the radically polymerizable compound. Thus, the ultraviolet-curable composition or the ultraviolet-curable ink is cured.

The polymerization initiator may be dissolved in the solvent in a state of not being encapsulated in the particles of the radically polymerizable compound, or may be contained in the solvent in a state of being encapsulated in the particles of the radically polymerizable compound. The polymerization initiator may also be contained in both of these states.

The polymerization initiator may be a fat-soluble polymerization initiator (which may hereinafter be referred to as a "fat-soluble initiator") or a water-soluble polymerization initiator (which may hereinafter be referred to as a "water-soluble initiator").

Here, the "fat-soluble initiator" refers to a polymerization initiator that is compatible with the polymerizable compound, such as an ultraviolet-curable oligomer, and is dissolved in an organic solvent. The "water-soluble initiator" refers to an initiator that is dissolved in water in an amount of 1 mass% or more. The same applies to a "fat-soluble sensitizer" and a "water-soluble sensitizer" described below.

Examples of the polymerization initiator used in the present invention include, but are not limited to, aromatic ketones, acylphosphine oxide compounds, aromatic onium salt compounds, organic peroxides, thio compounds (thioxanthone compounds, thiophenyl group-containing compounds), α-aminoalkylphenone compounds, hexaarylbiimidazole compounds, ketoxime ester compounds, borate compounds, azinium compounds, metallocene compounds, active ester compounds, compounds having a carbon-halogen bond, and alkylamine compounds.

As the polymerization initiator used in the present invention, a single type may be used alone, or two or more types thereof may be used in combination. For example, a fat-soluble initiator and a water-soluble initiator may be used in combination, the fat-soluble initiator may be incorporated in the particles of the polymerizable compound, such as an ultraviolet-curable oligomer, and the water-soluble initiator may be dissolved in an aqueous medium.

As the polymerization initiator, a thermal radical polymerization initiator may be used in combination in addition to the photoradical polymerization initiator as described above.

### Surfactant

The ultraviolet-curable composition I and the ultraviolet-curable ink I of the present invention preferably contain a small amount of a surfactant to ensure flatness of the cured product and printed matter formed and wettability with the substrate to the extent that water resistance and washing fastness are not impaired.

The ultraviolet-curable composition II and the ultraviolet-curable ink II of the present invention contain a small amount of a surfactant to ensure flatness of the cured product and printed matter formed and wettability with the substrate to the extent that water resistance and washing fastness are not impaired.

As the surfactant, any of nonionic surfactants such as a silicone-based surfactant and a fluorine-based surfactant, amphoteric surfactants, and anionic surfactants can be used. Among these, from the viewpoint of preventing unexpected aggregation with other components in the composition or ink of the present invention, a nonionic surfactant is preferable, and from the viewpoint of environmental compatibility, a silicone-based surfactant is more preferable among the nonionic surfactants. In particular, in a comparison of a silicone-based surfactant and a fluorine-based surfactant, aggregation of other components in the composition or ink of the present invention is better suppressed with a silicone-based surfactant, and thus a silicone-based surfactant is more preferable.

The silicone-based surfactant is not particularly limited and may be appropriately selected according to the intended purpose. Among such surfactants, those that are not decomposed even at a high pH are preferable, and examples thereof include side chain-modified polydimethylsiloxane, both terminal end-modified polydimethylsiloxane, one terminal end-modified polydimethylsiloxane, and side chain and both terminal end-modified polydimethylsiloxane. A silicone-based surfactant having a polyoxyethylene group or a polyoxyethylene polyoxypropylene group as a modifying group is particularly preferred because such a surfactant exhibits good properties as an aqueous surfactant. A polyether-modified silicone-based surfactant can also be used as the silicone-based surfactant, and examples thereof include a compound in which a polyalkylene oxide structure is introduced into a side chain of the Si portion of dimethylsiloxane.

As the fluorine-based surfactant, a compound having 2 or more and 16 or less carbons and substituted with fluorine is preferable, and a compound having 4 or more and 16 or less carbons and substituted with fluorine is more preferable.

As the fluorine-based surfactant, for example, a perfluoroalkyl sulfonic acid compound, a perfluoroalkyl carboxylic acid compound, a perfluoroalkyl phosphate compound, a perfluoroalkyl alkylene oxide adduct, and a polyoxyalkylene ether polymer compound having a perfluoroalkyl ether group in a side chain are preferable because the foaming properties are low.

Examples of the perfluoroalkyl sulfonic acid compound include perfluoroalkyl sulfonic acid and perfluoroalkyl sulfonate salts.

Examples of the perfluoroalkyl carboxylic acid compound include perfluoroalkyl carboxylic acid and perfluoroalkyl carboxylate salts.

Examples of the perfluoroalkyl phosphate compound include perfluoroalkyl phosphate and perfluoroalkyl phosphate salts.

Examples of the perfluoroalkyl alkylene oxide adduct include perfluoroalkyl ethylene oxide adducts.

Examples of the polyoxyalkylene ether polymer compound having a perfluoroalkyl ether group in a side chain include a sulfate salt of a polyoxyalkylene ether polymer having a perfluoroalkyl ether group in a side chain, and a salt of a polyoxyalkylene ether polymer having a perfluoroalkyl ether group in a side chain.

Examples of counter ions of the salts of these fluorine-based surfactants include Li, Na, K, NH₄, NH₃CH₂CH₂OH, NH₂(CH₂CH₂OH)₂, and NH(CH₂CH₂OH)₃.

Among these, polyoxyalkylene ether polymer compounds having a perfluoroalkyl ether group in a side chain are more preferable because of the particularly low foaming property, and fluorine-based surfactants represented by Formulae (2A) and (2B) below are particularly preferable.

CF₃CF₂(CF₂CF₂)ₛ-CH₂CH₂O(CH₂CH₂O)ₜH (2A)

In the compound represented by Formula (2A), in order to impart water solubility, s is preferably an integer of 0 or more and 10 or less, and t is preferably an integer of 0 or more and 40 or less.

CᵣF₂ᵣ₊₁-CH₂CH(OH)CH₂-O-(CH₂CH₂O)_{c}-Z (2B)

In the compound represented by Formula (2B), Z is H, C_{d}F_{2d+1}, CH₂CH(OH)CH₂-CₑF₂ₑ₊₁, or C_{f}H_{2f+1}. In C_{d}F_{2d+1}, d is an integer of 1 or more and 6 or less. In CH₂CH(OH)CH₂-CₑF₂ₑ₊₁, e is an integer of 4 or more and 6 or less. In C_{f}H_{2f+1}, f is an integer of 1 or more and 19 or less. r is an integer of 1 or more and 6 or less, and c is an integer of 4 or more and 14 or less.

As the fluorine-based surfactant, a commercially available product can be used. Examples of such commercially available products include Surflon S-111, S-112, S-113, S-121, S-131, S-132, S-141, and S-145 (available from AGC Seimi Chemical Co., Ltd.); Fluorad FC-93, FC-95, FC-98, FC-129, FC-135, FC-170C, FC-430, and FC-431 (available from Sumitomo 3M Ltd.); Megafac F-470, F-1405, and F-474 (available from DIC Corporation); Zonyl TBS, FSP, FSA, FSN-100, FSN, FSO-100, FSO, FS-300, and UR (available from DuPont de Nemours, Inc.); FT-110, FT-250, FT-251, FT-400S, FT-150, and FT-400SW (available from Neos Corporation); Polyfox PF-136A, PF-156A, PF-151N, PF-154, and PF-159 (available from Omnova Solutions, Inc.); Noigen FN-1287 (available from DKS Co., Ltd.); Unidyne DSN-403N (available from Daikin Industries, Ltd.); and LE-604, LE-605, LE-606, and LE-607 (available from Kyoeisha Chemical Co., Ltd.).

Examples of the amphoteric surfactant include lauryl aminopropionate salts, lauryl dimethyl betaine, stearyl dimethyl betaine, and lauryl dihydroxyethyl betaine.

Examples of the nonionic surfactant include polyoxyethylene alkylphenyl ethers, polyoxyethylene alkyl esters, polyoxyethylene alkylamines, polyoxyethylene alkylamides, polyoxyethylene propylene block polymers, sorbitan fatty acid esters, polyoxyethylene sorbitan fatty acid esters, acetylene alcohol derivatives, and acetylene glycol derivatives.

Examples of the anionic surfactant include polyoxyethylene alkyl ether acetate salts, dodecylbenzene sulfonate salts, laurate salts, and polyoxyethylene alkyl ether sulfate salts.

One type of these surfactants may be used alone, or two or more types thereof may be used in combination.

As described above, the silicone-based surfactant is not particularly limited and may be appropriately selected according to the intended purpose. A polyether-modified silicone-based surfactant having a poly(oxyethylene) group or a poly(oxyethylene) poly(oxypropylene) group as a modifying group exhibits good properties as an aqueous surfactant and thus is particularly preferred.

As such a surfactant, a suitably synthesized product may be used, or a commercially available product may be used. Examples of the commercially available products include products available from BYK-Chemie GmbH, Shin-Etsu Chemical Co., Ltd., Dow Corning Toray Co., Ltd., Nihon Emulsion Co., Ltd., and Kyoeisha Chemical Co., Ltd.

The polyether-modified silicone-based surfactant is not particularly limited and may be appropriately selected according to the intended purpose. Examples thereof include a compound represented by Formula (2) below, in which a polyalkylene oxide structure is introduced into a side chain of the Si moiety of dimethylpolysiloxane.

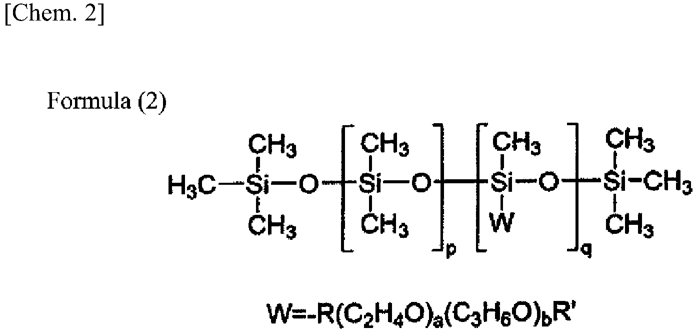

In Formula (2), p, q, a, and b represent integers. R and R' represent a hydrocarbon group.

As the polyether-modified silicone-based surfactant, a commercially available product can be used. Examples of commercially available products include KF-618, KF-642, and KF-643 (Shin-Etsu Chemical Co., Ltd.), SAG001, SAG002, SAG003, SAG005, SAG503, and SAG008 (Nissin Chemical Co., Ltd.), EMALEX-SS-5602 and SS-1906EX (Nihon Emulsion Co., Ltd.), FZ-2105, FZ-2118, FZ-2154, FZ-2161, FZ-2162, FZ-2163, and FZ-2164 (Dow Corning Toray Co., Ltd.), BYK-199, BYK-333, BYK-347, BYK-348, BYK-349, and BYK-378 (BYK-Chemie GmbH), and TSF4440 and TSF4452 (Momentive Performance Materials Inc.).

### [Sensitizer]

The ultraviolet-curable composition and the ultraviolet-curable ink of the present invention may contain a sensitizer.

When a sensitizer is present together with a polymerization initiator in the ultraviolet-curable composition and the ultraviolet-curable ink, the sensitizer in the system absorbs active energy rays and becomes excited, and upon contact with the polymerization initiator, the sensitizer promotes decomposition of the polymerization initiator, and thus, a curing reaction with higher sensitivity can be carried out.

The sensitizer may be fat-soluble or water-soluble. A fat-soluble sensitizer can be encapsulated in the radically polymerizable compound particles.

Examples of the sensitizer include aliphatic amines, amines having an aromatic group, cyclic amine compounds such as piperidine, alkoxy-anthracene compounds, urea-based compounds such as o-tolylthiourea, sulfur compounds such as sodium diethylthiophosphate and soluble salts of aromatic sulfinic acids, nitrile compounds such as N,N'-disubstituted-p-aminobenzonitrile, phosphorus compounds such as tri-n-butylphosphine and sodium diethyl dithiophosphate, and nitrogen compounds such as Michler's ketone, N-nitrosohydroxylamine derivatives, oxazolidine compounds, tetrahydro-1,3-oxazine compounds, and condensates of formaldehyde or acetaldehyde and a diamine.

A single type of these sensitizers may be used alone, or two or more types thereof may be used in combination.

### Additional Oligomer, Resin, and Monomer

As necessary, the ultraviolet-curable composition and the ultraviolet-curable ink of the present invention may contain, in addition to the above components, an optional resin component, an optional oligomer component, and an optional monomer component (these are collectively referred to as "additional resin components"). The additional resin components may be encapsulated in the particles of the radically polymerizable compound, may be dissolved in a solvent, or may be dispersed alone or in a state of being complexed with other components in the composition or the ink.

### Additional Additive

The ultraviolet-curable composition and the ultraviolet-curable ink of the present invention may contain an additional additive, as necessary, in addition to the above components.

Examples of the additional additive include known additives such as an anti-fading agent, an emulsion stabilizer, a penetration enhancer, an ultraviolet absorber, a preservative, an antifungal agent, a rust inhibitor, a pH adjuster, a viscosity adjuster, a dispersant, a dispersion stabilizer, an antifoaming agent, a solid wetting agent, and a chelating agent. These various additives may be added after preparation or may be added during preparation.

For details of the additional additives, reference may be made to the descriptions in paragraphs [0088] to [0096] of JP 2010-65205 A and the descriptions in paragraphs [0083] to [0090] of JP 2010-70669 A.

### Content of Each Component

The content of water in the ultraviolet-curable composition and the ultraviolet-curable ink of the present invention is not particularly limited and may be appropriately selected according to the intended purpose. When the ultraviolet-curable composition and the ultraviolet-curable ink of the present invention are used as an inkjet ink, from the viewpoint of drying properties and ejection reliability of the ink, the content of water is usually 40 mass% or more, and preferably 50 mass% or more, and is usually 90 mass% or less, and preferably 80 mass% or less in the ultraviolet-curable composition and the ultraviolet-curable ink of the present invention.

In a case in which the ultraviolet-curable composition or the ultraviolet-curable ink of the present invention contains a water-soluble organic solvent, the content thereof (the total content of the water-soluble organic solvent used also as a moisture-retention solvent and the water-soluble organic solvent used as an aqueous medium) is not particularly limited and can be appropriately selected according to the type of the water-soluble organic solvent to be used and the intended purpose. When the ultraviolet-curable composition and the ultraviolet-curable ink are used as an inkjet ink, from viewpoint of drying properties, ejection reliability, and wettability with a substrate, the content of the water-soluble organic solvent is usually 10 mass% or more, and is usually 50 mass% or less and preferably 40 mass% or less relative to the total mass of the ultraviolet-curable composition and the ultraviolet-curable ink.

The total solid content concentration, which includes the components other than the solvent, in the ultraviolet-curable composition and the ultraviolet-curable ink of the present invention is not particularly limited and may be appropriately selected according to the intended purpose. From the viewpoint of coatability, the total solid content concentration is adjusted to usually 40 mass% or less and preferably 35 mass% or less relative to the total mass of the ultraviolet-curable composition and the ultraviolet-curable ink. When the ultraviolet-curable composition and the ultraviolet-curable ink are used as an inkjet ink, from the viewpoint of drying properties and ejection reliability, the total solid content concentration is adjusted to usually 5 mass% or more, preferably 7 mass% or more, and more preferably 9 mass% or more, and usually 30 mass% or less, preferably 25 mass% or less, more preferably 23 mass% or less, even more preferably 20 mass% or less, and particularly preferably 15 mass% or less relative to the total mass of the ultraviolet-curable composition and the ultraviolet-curable ink.

In a case in which a mixed liquid of water and a water-soluble organic solvent is used as the solvent, the ratio (water:water-soluble organic solvent) of water to the water-soluble organic solvent (the total of the water-soluble organic solvent used also as a moisture-retention solvent and the water-soluble organic solvent used as a solvent) is usually from 1:0.05 to 1:1.5 (mass ratio), preferably from 1:0.1 to 1:1.2 (mass ratio), and more preferably from 1:0.15 to 1:1.1 (mass ratio), from the viewpoint of improving drying properties and ejection properties during inkjet printing.

From the viewpoint of ultraviolet curability and the performance of the produced cured product and printed matter, the content of the radically polymerizable compound in the ultraviolet-curable composition and the ultraviolet-curable ink of the present invention is preferably 5 mass% or more, more preferably 6 mass% or more, and even more preferably 7 mass% or more relative to the total mass of the ultraviolet-curable composition and the ultraviolet-curable ink. Meanwhile, in the case of use as an inkjet ink, the content of the radically polymerizable compound is usually 20 mass% or less, preferably 15 mass% or less, and more preferably 12 mass% or less relative to the total mass of the ultraviolet-curable composition and the ultraviolet-curable ink from the viewpoint of ejection stability.

From the same viewpoint, the content of the radically polymerizable compound in the total solid content of the ultraviolet-curable composition and the ultraviolet-curable ink of the present invention is preferably 40 mass% or more, more preferably 45 mass% or more, and even more preferably 50 mass% or more, and is usually 95 mass% or less, preferably 90 mass% or less, and more preferably 85 mass% or less.

The total solid content in the ultraviolet-curable composition and the ultraviolet-curable ink of the present invention can be rephrased as the constituent components of the cured product and the printed matter formed by the ultraviolet-curable composition and the ultraviolet-curable ink of the present invention, and the above-described numerical value ranges can be similarly adopted. The content of each component in the total solid content is substantially equivalent to the content of each component thereof in the cured product and the printed matter formed by the ultraviolet-curable composition and the ultraviolet-curable ink of the present invention.

Accordingly, the fact that the content of the radically polymerizable compound in the total solid content of the ultraviolet-curable composition and the ultraviolet-curable ink of the present invention is preferably 40 mass% or more, more preferably 45 mass% or more, and even more preferably 50 mass% or more, and usually 95 mass% or less, preferably 90 mass% or less, and more preferably 85 mass% or less relative to the total mass thereof is equivalent to that the content of components derived from the radically polymerizable compound in the cured product and the printed matter formed by the ultraviolet-curable composition and the ultraviolet-curable ink of the present invention is preferably 40 mass% or more, more preferably 45 mass% or more, and even more preferably 50 mass% or more, and usually 95 mass% or less, preferably 90 mass% or less, and more preferably 85 mass% or less.

The same applies to the contents of the colorant and additional components described below.

The content of the urethane resin particles in the ultraviolet-curable composition and the ultraviolet-curable ink of the present invention is preferably 0.1 mass% or more, more preferably 0.2 mass% or more, even more preferably 0.4 mass% or more, and particularly preferably 0.5 mass% or more relative to the total mass of the ultraviolet-curable composition and the ultraviolet-curable ink, from the viewpoint of the effect of improving the washing fastness by using the urethane resin particles. Meanwhile, in the case of use as an inkjet ink, the content of the urethane resin particles is usually 10 mass% or less, preferably 7.5 mass% or less, and more preferably 5 mass% or less relative to the total mass of the ultraviolet-curable composition and the ultraviolet-curable ink from the viewpoint of ejection stability.

From the same viewpoint, the content of the urethane resin particles in the total solid content of the ultraviolet-curable composition of the present invention is preferably 1 mass% or more, more preferably 2 mass% or more, even more preferably 3 mass% or more, and particularly preferably 10 mass% or more, and is usually 50 mass% or less, preferably 40 mass% or less, and more preferably 30 mass% or less.

The content of the urethane resin particles in the ultraviolet-curable composition and the ultraviolet-curable ink of the present invention is preferably 3 mass% or more, more preferably 3.5 mass% or more, and even more preferably 4 mass% or more relative to the content of the radically polymerizable compound. Meanwhile, the content of the urethane resin particles is preferably 30 mass% or less, more preferably 28 mass% or less, and even more preferably 26 mass% or less relative to the content of the radically polymerizable compound. When the content of the urethane resin particles relative to the radically polymerizable compound is equal to or more than the lower limit, the effect of improving the washing fastness by using the urethane resin particles is excellent, and when the content is equal to or less than the upper limit, the storage stability is excellent.

From the viewpoint of improved image density, good fixability, and ejection stability, the content of the colorant in the ultraviolet-curable ink of the present invention is usually 0.1 mass% or more, and preferably 1 mass% or more, and is usually 8 mass% or less, and preferably 6 mass% or less.

From the same viewpoint, the content of the colorant in the total solid content of the ultraviolet-curable ink of the present invention is usually 1 mass% or more, and preferably 5 mass% or more, and is usually 40 mass% or less, and preferably 30 mass% or less.

The total content of all polymerization initiators in the ultraviolet-curable composition and the ultraviolet-curable ink of the present invention is usually 0.06 mass% or more, preferably 0.13 mass% or more, and more preferably 0.35 mass% or more, and is usually 12 mass% or less, preferably 8 mass% or less, more preferably 4 mass% or less, and even more preferably 2.7 mass% or less relative to the total mass of the ultraviolet-curable composition and the ultraviolet-curable ink. When the total content of all the polymerization initiators is within the above range, the curability can be enhanced.

From the same viewpoint, the total content of all the polymerization initiators in the total solid content of the ultraviolet-curable composition and the ultraviolet-curable ink of the present invention is usually 0.55 mass% or more, preferably 1.1 mass% or more, more preferably 2.3 mass% or more, and even more preferably 3.5 mass% or more, and is usually 28 mass% or less, preferably 21 mass% or less, and more preferably 15 mass% or less.

The content of a surfactant when the ultraviolet-curable composition I and the ultraviolet-curable ink I of the present invention contain the surfactant, and the content of the surfactant in the ultraviolet-curable composition II and the ultraviolet-curable ink II of the present invention are not particularly limited and may be appropriately selected according to the intended purpose to the extent that water resistance and washing fastness are not impaired. From the viewpoint of improving wettability, surface smoothness after coating, and ejection stability during inkjet printing, the content of the surfactant in the ultraviolet-curable composition and the ultraviolet-curable ink is usually 0.001 mass% or more, preferably 0.01 mass% or more, and more preferably 0.03 mass% or more, and is usually 5 mass% or less, preferably 3 mass% or less, and more preferably 1 mass% or less relative to the total mass of the ultraviolet-curable composition and the ultraviolet-curable ink.

From the same viewpoint, the content of the surfactant in the total solid content of the ultraviolet-curable composition and the ultraviolet-curable ink of the present invention is usually 0.01 mass% or more, preferably 0.1 mass% or more, and more preferably 0.2 mass% or more, and is usually 10 mass% or less, preferably 5 mass% or less, and more preferably 3 mass% or less.

When the ultraviolet-curable composition and the ultraviolet-curable ink of the present invention contain a sensitizer, the content thereof is usually 0.01 mass% or more, preferably 0.03 mass% or more, and more preferably 0.05 mass% or more, and is usually 4 mass% or less, preferably 3 mass% or less, more preferably 1 mass% or less, and even more preferably 0.7 mass% or less relative to the total mass of the ultraviolet-curable composition and the ultraviolet-curable ink. When the content of the sensitizer is within the above range, the effect of the sensitizer can be sufficiently achieved.

From the same viewpoint, the content of the sensitizer in the total solid content of the ultraviolet-curable composition and the ultraviolet-curable ink of the present invention is usually 0.05 mass% or more, preferably 0.1 mass% or more, more preferably 0.3 mass% or more, and even more preferably 0.5 mass% or more, and is usually 8 mass% or less, preferably 6 mass% or less, and more preferably 5 mass% or less.

### Method for Producing Ultraviolet-Curable Composition and Ultraviolet-Curable Ink

The method for producing the ultraviolet-curable composition and the ultraviolet-curable ink of the present invention is not particularly limited. An example of the method for producing the ultraviolet-curable composition and the ultraviolet-curable ink of the present invention is a method of preparing a dispersion in which a radically polymerizable compound is dispersed in the form of particles in an aqueous medium (hereinafter may be referred to as a "radically polymerizable compound dispersion"), and if necessary, preparing a dispersion in which a colorant such as a pigment is dispersed in an aqueous medium (hereinafter may be referred to as a "colorant dispersion"), and then mixing the radically polymerizable compound dispersion, urethane resin particles (a commercially available urethane resin particle aqueous dispersion can be used as described above), a polymerization initiator, and if necessary, a surfactant, additional additives, an organic solvent, and the colorant dispersion.

Even when a colorant is added to the ultraviolet-curable composition of the present invention, an ultraviolet-curable ink having the same performance can be produced.

### Preparation of Radically Polymerizable Compound Dispersion

A known method such as a high-pressure emulsification method or a phase inversion emulsification method can be employed for preparation of the radically polymerizable compound dispersion. In the preparation of the radically polymerizable compound dispersion, various known emulsifiers and dispersants may be used as necessary as long as the effects of the present invention are not impaired.

The high-pressure emulsification method is a method in which an aqueous phase, an oil phase, and an amphiphilic substance such as a surfactant are premixed and emulsified using a high-pressure emulsifier such as a homogenizer. The phase inversion emulsification method is a method of producing an O/W type emulsion by dissolving and dispersing an amphiphilic substance such as a surfactant in an oil phase and adding an aqueous phase thereto. In a case in which two or more types of radically polymerizable compounds are used, the dispersion is preferably prepared after premixing the compounds.

The solid content concentration of the radically polymerizable compound dispersion prepared in this manner is preferably about 10 mass% or more and about 40 mass% or less from the viewpoint of handling properties.

Two or more types of radically polymerizable compounds may be used. Each radically polymerizable compound may be separately prepared in a dispersion and then blended at any ratio, but it is preferable to prepare a dispersion after premixing the radically polymerizable compounds. In addition, additional components, such as, for example, a polymer that is not radically polymerizable, a polymerization initiator, and a preservative, may be premixed, and then the mixture may be prepared into a dispersion.

As a method for preparing a radically polymerizable compound dispersion other than the above-described emulsification method, an emulsion polymerization method is also used. The emulsion polymerization method is a polymerization method in which an aqueous medium, a radically polymerizable monomer poorly soluble in water, such as a vinyl monomer, and an emulsifier are mixed, and radical polymerization is carried out in an emulsified state. However, in the emulsion polymerization method, it is difficult to produce emulsion particles that are stably dispersed in an aqueous medium and that retain radical polymerizable groups in the polymer in a controlled manner. Since a large amount of emulsifier remains in the system, the water resistance and washing fastness of the cured product or printed matter to be formed may be significantly impaired, and components imposing an environmental burden may be continuously released. Therefore, it is preferable not to employ, as the radically polymerizable compound used in the present invention, a radically polymerizable compound obtained by an emulsion polymerization method, i.e., a radically polymerizable compound which is an emulsion polymer. Accordingly, in the ultraviolet-curable composition I and the ultraviolet-curable ink I of the present invention, a radically polymerizable compound free from an emulsion polymer is used.

That is, the radically polymerizable compound particles used in the present invention are preferably obtained not by an emulsion polymerization method, but by an emulsification method other than the emulsion polymerization method, such as a high-pressure emulsification method or a phase inversion emulsification method.

### Preparation of Colorant Dispersion

A colorant dispersion can be prepared by adding a colorant such as a pigment to a solvent such as water and then mixing.

From the viewpoint of handling properties and storage stability, the concentration of the colorant such as a pigment in the colorant dispersion is usually 5 mass% or more, and preferably 10 mass% or more, and is usually 40 mass% or less, and preferably 35 mass% or less.

As the colorant dispersion, a commercially available product may be used as is.

### Viscosity of Ultraviolet-Curable Composition

The viscosity of the ultraviolet-curable composition of the present invention can be optionally adjusted according to the application and usage form. In a case in which the ultraviolet-curable composition of the present invention is used in an inkjet printer, the viscosity at 25°C is preferably 25 mPa·sec or less, more preferably 20 mPa·sec or less, and even more preferably 10 mPa·sec or less. The lower limit of the viscosity of the ultraviolet-curable composition of the present invention is not particularly limited, but is preferably 1 mPa·sec or more, and more preferably 2 mPa·sec or more.

### Viscosity of Ultraviolet-Curable Ink

The viscosity of the ultraviolet-curable ink of the present invention can be optionally adjusted according to the application and usage form. In a case in which the ultraviolet-curable ink of the present invention is used in an inkjet printer, the viscosity at 25°C is preferably 25 mPa·sec or less, more preferably 20 mPa·sec or less, and even more preferably 10 mPa·sec or less. The lower limit of the viscosity of the ultraviolet-curable ink of the present invention is not particularly limited, but is preferably 1 mPa·sec or more, and more preferably 2 mPa·sec or more.

### Substrate

The substrate to which the ultraviolet-curable composition and the ultraviolet-curable ink of the present invention are applied is not particularly limited, and examples thereof include plastic materials such as polyesters, e.g., polyethylene terephthalate (PET), polyvinyl chloride (PVC), and polyolefins, e.g., polyethylene (PE) and polypropylene (PP), papers, textiles (cloth and fabrics), leather, glass, ceramics, wood, metal, rubber, and composite materials thereof. The ultraviolet-curable composition and the ultraviolet-curable ink of the present invention can form a cured product and a printed matter having good adhesion to various substrates and excellent strength such as washing fastness.

As described in the mechanism above, the ultraviolet-curable composition and the ultraviolet-curable ink of the present invention contain urethane resin particles, and thus the urethane resin of the urethane resin particles exhibits excellent adhesion to fibers of water-absorbing substrates such as fabrics. Accordingly, the use of water-absorbing substrates such as fabrics is effective as the substrate.

### Cured Product and Printed Matter

A cured product and a printed matter can be produced by curing the ultraviolet-curable composition and the ultraviolet-curable ink of the present invention, respectively.

As a method of curing the ultraviolet-curable composition or the ultraviolet-curable ink of the present invention to produce a cured product or a printed matter, a method may be used in which the ultraviolet-curable composition or the ultraviolet-curable ink is applied onto a substrate using a known method such as a coater (e.g., a spin coater or a bar coater) or various printing methods such as inkjet printing, after which the coated substrate is irradiated with an active energy ray. Alternatively, a method may be used in which the ultraviolet-curable composition or the ultraviolet-curable ink is applied onto a substrate such as a film, then transferred onto another substrate, and then irradiated with an active energy ray. In addition, the cured product or printed matter can be patterned by photolithography. The polymerization initiator is decomposed by irradiation with an active energy ray, resulting in the generation of radicals, whereby a polymerization reaction of the radically polymerizable compound proceeds.

A drying step may be added before, after, before and after, or simultaneously with irradiation with the active energy ray. In the drying step, for example, the substrate is heated.

The heating temperature during heating of the substrate in the drying step is preferably 25°C or higher, more preferably 30°C or higher, and even more preferably 35°C or higher. Through this heating, volatile components such as a solvent can be dried, and curability tends to be further enhanced. The upper limit of the heating temperature is not particularly limited.

The ultraviolet-curable composition and the ultraviolet-curable ink of the present invention contain urethane resin particles, thereby avoiding the need for heating at a high temperature for a long time. Accordingly, the heating conditions are preferably set to 25 to 120°C, particularly 30 to 100°C, for about 1 to 60 minutes.

The heating means is not particularly limited, and examples thereof include a ceramic heater, a halogen heater, and a quartz tube heater.

As described above, the timing of heating may be before, during, or after adhesion of the ultraviolet-curable composition or the ultraviolet-curable ink of the present invention to the substrate. However, it is more preferable that heating be continued throughout the periods before, during, and after the adhesion.

In the drying step, not only heating of the substrate as described above but also, for example, air drying or drying under reduced pressure under normal temperature and humidity conditions may be further performed, or alternatively, only air drying or drying under reduced pressure may be performed without heating.

### Light Source (Active Energy Ray Source)

A mercury lamp, a metal halide lamp, a gas-solid laser, and the like are widely known as light sources (active energy ray sources). However, a strong demand exists for mercury-free light sources from the current viewpoint of environmental protection, and replacement with GaN-based semiconductor ultraviolet light-emitting devices is very useful from both industrial and environmental perspectives. Furthermore, an ultraviolet light-emitting diode (UV-LED) and an ultraviolet laser diode (UV-LD) are small in size, have a long service life, are highly efficient, and are low in cost, and thus UV-LED and UV-LD are expected to be used as light sources for ultraviolet-curable inkjet printers. Among these, a UV-LED is preferable.

The emission peak wavelength of the active energy ray source to be irradiated is preferably in a range of from 350 to 450 nm. The irradiation energy is preferably 20 J/cm² or less, and for example, is preferably from 0.5 to 10 J/cm².

The number of the emission peak wavelengths may be one or more within the above wavelength range.

The irradiation with an active energy ray is not limited to an intentional process as described above, and may be, for example, sunlight irradiation by outdoor exposure. When the reactivity (curability) of the radically polymerizable compound used in the present invention is high, heating alone is sufficient without the need for irradiation with an active energy ray. That is, as long as the ultraviolet-curable composition or ink of the present invention is curable through ultraviolet light, the ultraviolet-curable composition or ink is not limited to being used in a printing method having a process of irradiating with an active energy ray.

### Inkjet Ink Storage Container

The ultraviolet-curable ink of the present invention can be stored in an ink cartridge or an ink bottle, and thus, it is not necessary to directly touch the ink in work such as transporting the ink or replacing the ink. Therefore, staining of fingers or clothes can be prevented. In addition, foreign substances such as dust can be prevented from being mixed into the ink.

Details such as the shape, size, and material of the ink storage container itself are not particularly limited as long as such details are suitable, for example, for an inkjet printer to which the ink storage container is applied. It is desirable that the material of the ink storage container is a light-shielding material that does not transmit light, or that the container is covered with a light-shielding sheet or the like.

### Inkjet Recording Method

The ultraviolet-curable ink of the present invention can be suitably used in an inkjet recording method.

An inkjet recording method in which the ultraviolet-curable ink of the present invention is used preferably includes a step of ejecting the ultraviolet-curable ink of the present invention from an ejection nozzle of an inkjet printer to adhere the ultraviolet-curable ink to a substrate, a heating step of heating the substrate with the ink adhered, and an irradiation step of irradiating the ink adhered to the substrate with an active energy ray.

The step of adhering the ultraviolet-curable ink of the present invention to a substrate is not necessarily limited to a method using an inkjet printer, as long as the ink is adhered to the substrate in an atomized form (a mist or spray form).

In the heating step, the presence of a heating means generally tends to cause the ink on the nozzle surface to dry, resulting in poor ejection, and thus the heating temperature is preferably 120°C or lower and more preferably 100°C or lower.

### Application

The ultraviolet-curable composition and the ultraviolet-curable ink of the present invention are water-based and therefore are excellent in terms of environmental and safety properties, and the cured product and the printed matter also exhibit excellent water resistance and solvent resistance while satisfying the required performance aspects in a well-balanced manner. When the ultraviolet-curable composition or the ultraviolet-curable ink is used as an ink, printed images excelling in high image quality performance and high cured film performance can be printed on various substrates with high productivity, and because of such merits, the ink can be used in various applications such as on posters, road signs, signboards, billboards, various outdoor and indoor display boards, building materials (surface materials such as exteriors, interiors, walls, floors, ceilings, and windows), exteriors of vehicles (automobiles, trains, aircraft, and the like), surface materials of furniture and OA equipment, and the like, and paper printed matter.

The usage form of the ultraviolet-curable composition of the present invention is not limited to an ink, and the ultraviolet-curable composition can be used as a coating material, an adhesive, a paint, or the like.

In particular, the ultraviolet-curable composition and the ultraviolet-curable ink of the present invention can form a printed coating film having excellent coating film strength, particularly high washing fastness, due to the urethane resin particles contained therein. Accordingly, the ultraviolet-curable composition and the ultraviolet-curable ink of the present invention can be suitably used for various applications such as garment fabrics such as T-shirts, textiles that may be exposed to water, interior wallpaper, and home furnishings.

### Examples

Hereinafter, Examples of the present invention will be described. However, the present invention is not limited to the Examples.

### Measurement Method

Raw materials used in Examples and Comparative Examples were subjected to the following measurements.

### Tg of Urethane Resin Particles

Tg of the urethane resin particles used in Examples and Comparative Examples was measured by the following method using a differential scanning calorimeter (DSC) (DSC7000X, available from Hitachi High-Tech Science Corporation).

### Measurement Conditions

A dried film of a dispersion of urethane resin particles was prepared as a measurement sample, and 5 to 10 mg of the sample was placed in an aluminum sample pan, followed by measurement of Tg under a nitrogen atmosphere.

During the measurement, the starting temperature was set to 30°C, the temperature was raised to 120°C at 10°C/min, and then the temperature was lowered to -100°C at 10°C/min. Thereafter, a second heating run was performed at 10°C/min, and the measurement was carried out to 120°C.

From the graph of heat flow versus temperature obtained under the above conditions, Tg was defined as the temperature at which the slope of the curve corresponding to the stepwise change observed during the second heating run reached its maximum.

### Volume Average Particle Size (D₅₀)

The volume average particle size (D₅₀) of the urethane resin particles and the radically polymerizable compound was measured with a particle size analyzer NANOTRAC WAVE II-EX150 (available from MicrotracBEL Corporation) by a dynamic light scattering method.

### Test Example 1

### Urethane Resin Particles

The following was used as the urethane resin particles.
For Examples
IMPRANIL (trade name) DL3040: aqueous dispersion of urethane resin particles available from Sumika Covestro Urethane Co., Ltd. (Tg: -55°C, volume average particle size (D₅₀): 150 nm)
IMPRANIL (trade name) DLI: aqueous dispersion of urethane resin particles available from Sumika Covestro Urethane Co., Ltd. (Tg: -52°C, volume average particle size (D₅₀): 230 nm)
Takelac (trade name) W-6110: aqueous dispersion of urethane resin particles available from Mitsui Chemicals, Inc. (Tg: -36°C, volume average particle size (D₅₀): 42 nm)
DISPERCOLL (trade name) U53: aqueous dispersion of urethane resin particles available from Sumika Covestro Urethane Co., Ltd. (Tg: -52°C, volume average particle size (D₅₀): 130 nm)
DISPERCOLL (trade name) U56: aqueous dispersion of urethane resin particles available from Sumika Covestro Urethane Co., Ltd. (Tg: -55°C, volume average particle size (D₅₀): 190 nm)
DISPERCOLL (trade name) U8755: aqueous dispersion of urethane resin particles available from Sumika Covestro Urethane Co., Ltd. (Tg: -55°C, volume average particle size (D₅₀): 140 nm)
Superflex (trade name) 300: aqueous dispersion of urethane resin particles available from DKS Co., Ltd. (Tg: -52°C, volume average particle size (D₅₀): 58 nm)
Superflex (trade name) 500M: aqueous dispersion of urethane resin particles available from DKS Co., Ltd. (Tg: -57°C, volume average particle size (D₅₀): 94 nm)
DAOTAN (trade name) TW 6450/30WA: aqueous dispersion of urethane resin particles available from Daicel-Allnex Ltd. (Tg: -28°C, volume average particle size (D₅₀): 32 nm)

### For Comparative Examples

Takelac (trade name) WS-4000: aqueous dispersion of urethane resin particles available from Mitsui Chemicals, Inc. (Tg: undetected)
Takelac (trade name) W-605: aqueous dispersion of urethane resin particles available from Mitsui Chemicals, Inc. (Tg: undetected)
Takelac (trade name) W-5030: aqueous dispersion of urethane resin particles available from Mitsui Chemicals, Inc. (Tg: undetected)
IMPRANIL (trade name) DLP-R: aqueous dispersion of urethane resin particles available from Sumika Covestro Urethane Co., Ltd. (Tg: -6°C, volume average particle size (D₅₀): 250 nm)
DISPERCOLL (trade name) U42: aqueous dispersion of urethane resin particles available from Sumika Covestro Urethane Co., Ltd. (Tg: -6°C)

### Preparation of Radically Polymerizable Compound 1

A radically polymerizable compound 1 was produced by reacting 0.4 mol of a trimer of hexamethylene diisocyanate, 0.8 mol of dipentaerythritol pentaacrylate, and 0.4 mol of polyethylene glycol monoallyl ether (in Formula (1), Alk is an ethylene group, J is an allyl group, and g is from 30 to 40).

### Preparation of Aqueous Dispersion of Radically Polymerizable Compound 1

The radically polymerizable compound 1 was maintained at 60°C, and GENOPOL TX-2 available from RAHN AG was added thereto as a polymerization initiator A in an amount of 1 mass% relative to the radically polymerizable compound. Ion-exchanged water preheated to 60°C was added thereto with stirring and mixing, to prepare an aqueous dispersion of the radically polymerizable compound 1. The volume average particle size (D₅₀) of the particles of the radically polymerizable compound 1 in the aqueous dispersion of the radically polymerizable compound 1 was 36 nm. The solid content concentration of the aqueous dispersion was 20 mass%.

### Preparation of Ink 1

Ink 1 was prepared by adding and mixing ion-exchanged water, the aqueous dispersion of the radically polymerizable compound 1, IMPRANIL (trade name) DL3040 available from Sumika Covestro Urethane Co., Ltd., which is an aqueous dispersion of urethane resin particles, 10 parts by mass of each of diethylene glycol ethyl methyl ether and propylene glycol as water-soluble organic solvents, 1.0 part by mass of a polymerization initiator mixture different from the polymerization initiator A, 0.12 parts by mass of BYK-347 available from BYK Japan KK as a silicone-based surfactant, and 2.5 parts by mass of a black pigment (C. I. Pigment Black 7) in amounts shown in Table 1. The ion-exchanged water was added in an amount of parts by mass obtained by subtracting the total parts by mass of the above-described materials other than the ion-exchanged water from 100 parts by mass, when the total parts by mass of all the above-described materials including the ion-exchanged water was 100 parts by mass (i.e., balance).

The numerical values of the contents of the radically polymerizable compound and the urethane resin particles in the ultraviolet-curable ink shown in Table 1 are values converted from the contents of the radically polymerizable compound and the urethane resin particles in the respective aqueous dispersions. The same applies to the values in Table 2.

### Preparation of Inks 2 to 21

Inks 2 to 21 were prepared in the same manner as Ink 1 except that the type and/or the content of the urethane resin particles and the content of the radically polymerizable compound 1 were changed as shown in Table 1.

The composition produced by removing the black pigment from the prepared ink corresponds to the ultraviolet-curable composition of the present invention.

### Example 1-1

A white fabric (cotton) was used as a substrate, and 5 µL of Ink 1 was measured with a micropipette and dropped onto the substrate heated to 40°C on a hot plate. The substrate was heated for 10 minutes, and then irradiated with ultraviolet light at an irradiation dose of 7 J/cm² using an LED having a peak wavelength of 385 nm, to thereby form a cured film.

### Examples 1-2 to 1-15 and Comparative Examples 1-1 to 1-6

Cured films were formed in the same manner as in Example 1-1 except that the type of ink was changed as shown in Table 1.

### Evaluation of Washing Fastness of Cured Film (Washing Fastness 1)

The washing fastness was evaluated by scrubbing cotton with the cured film prepared in each of Examples and Comparative Examples under running water, followed by visual observation of the cotton after scrubbing. The observation results were evaluated according to the following evaluation criteria. The results are shown in Table 1.

In the present invention, a grade of B or higher was regarded as "pass". Evaluation Criteria
A: The cured film does not peel off, and the white surface of the fabric is not visible.
B: The cured film slightly peels off, and a portion of the white surface of the fabric is visible.
C: The cured film peels off and most of the white surface of the fabric is exposed.

**[Table 1]**

| | | Content in ultraviolet-curable Ink (mass%) | | | | | Washing fastness 1 |
|---|---|---|---|---|---|---|---|
| | | Ink No. | Content of radically polymerizable compound 1 | Urethane resin particles | | | |
| | | | | Type | Content | Tg (°C) | |
| Example | 1-1 | 1 | 8 | IMPRANIL^{®} DL3040 | 2 | -55 | A |
| | 1-2 | 2 | 8 | Takelac^{®} W-6110 | 2 | -36 | B |
| | 1-3 | 3 | 8 | DISPERCOLL^{®} U53 | 2 | -52 | A |
| | 1-4 | 4 | 8 | DISPERCOLL^{®} U56 | 2 | -55 | A |
| | 1-5 | 5 | 8 | Superflex^{®} 300 | 2 | -52 | B |
| | 1-6 | 6 | 8 | Superflex^{®} 500M | 2 | -57 | A |
| | 1-7 | 7 | 8 | DISPERCOLL^{®} U8755 | 2 | -55 | B |
| | 1-8 | 8 | 8 | IMPRANIL^{®} DLI | 2 | -52 | B |
| | 1-9 | 9 | 10 | DAOTAN^{®} TW6450/30WA | 2 | -28 | A |
| | 1-10 | 10 | 9.5 | IMPRANIL^{®} DL3040 | 0.5 | -55 | B |
| | 1-11 | 11 | 9 | IMPRANIL^{®} DL3040 | 1 | -55 | B |
| | 1-12 | 12 | 8.5 | IMPRANIL^{®} DL3040 | 1.5 | -55 | A |
| | 1-13 | 13 | 9.5 | DISPERCOLL^{®} U53 | 0.5 | -52 | B |
| | 1-14 | 14 | 9 | DISPERCOLL^{®} U53 | 1 | -52 | A |
| | 1-15 | 15 | 8.5 | DISPERCOLL^{®} U53 | 1.5 | -52 | A |
| Comparative Example | 1-1 | 16 | 10 | - | - | - | C |
| | 1-2 | 17 | 8 | Takelac^{®} WS-4000 | 2 | Undetected | C |
| | 1-3 | 18 | 8 | Takelac^{®} W-605 | 2 | Undetected | C |
| | 1-4 | 19 | 8 | Takelac^{®} W-5030 | 2 | Undetected | C |
| | 1-5 | 20 | 8 | IMPRANIL^{®} DLP-R | 2 | -6 | C |
| | 1-6 | 21 | 8 | DISPERCOLL^{®} U42 | 2 | -6 | C |

The results shown in Table 1 indicate that the ultraviolet-curable ink using the ultraviolet-curable composition of the present invention provides a cured film having good washing fastness.

In contrast, in Comparative Example 1-1, in which urethane resin particles are not contained, in Comparative Examples 1-2 to 1-4, in which urethane resin particles having an undetected Tg are used, and in Comparative Examples 1-5 and 1-6, in which urethane resin particles having a Tg of higher than -10°C are used, poor washing fastness is exhibited.

### Test Example 2

### Radically Polymerizable Compound

In Test Example 2, the following radically polymerizable compounds were used in addition to the raw materials used in Test Example 1.

### For Examples

UCECOAT (trade name) UC7655: aqueous dispersion of urethane acrylate resin particles available from Daicel-Allnex Ltd. (solid content concentration: 35 mass%, volume average particle size (D₅₀): 260 nm)

UCECOAT (trade name) UC7788: aqueous dispersion of urethane acrylate resin particles available from Daicel-Allnex Ltd. (solid content concentration: 40 mass%, volume average particle size (D₅₀): 223 nm)

Beamset (trade name) EM-90: aqueous dispersion of urethane acrylate resin particles available from Arakawa Chemical Industries, Ltd. (solid content concentration: 40 mass%, volume average particle size (D₅₀): 31 nm)

Beamset (trade name) EM-94: aqueous dispersion of urethane acrylate resin particles available from Arakawa Chemical Industries, Ltd. (solid content concentration: 50 mass%, volume average particle size (D₅₀): 64 nm)

### For Comparative Examples

NK Ester (trade name) A-GLY-20E: trifunctional alkoxylated glycerin acrylate available from Shin-Nakamura Chemical Co., Ltd. (solid content concentration: 100 mass%)

### Preparation of Ink 22

The polymerization initiator A was added to 8 parts by mass of the radically polymerizable compound 1 in an amount of 1 mass% relative to the radically polymerizable compound 1. Ion-exchanged water preheated to 60°C was added with stirring and mixing at 60°C to prepare an aqueous dispersion. The aqueous dispersion was mixed with 0.9 parts by mass of a polymerization initiator mixture different from the polymerization initiator A, 0.1 parts by mass of BYK-349 available from BYK Japan KK as a silicone-based surfactant, 0.5 parts by mass of OLFINE E1010 available from Nissin Chemical Co., Ltd. as an acetylene glycol-based surfactant, and 5.0 parts by mass of propylene glycol as a water-soluble organic solvent.

Next, Ink 22 was prepared by mixing DISPERCOLL (trade name) U53 available from Sumika Covestro Urethane Co., Ltd., which is an aqueous dispersion of urethane resin particles, 0.5 parts by mass of BYK-199 available from BYK Japan KK as a silicone-based surfactant, 2.5 parts by mass of a black pigment dispersion (C.I. Pigment Black 7) as a colorant, and 15.5 parts by mass of propylene glycol as a water-soluble organic solvent, and adding and mixing so that the contents of the radically polymerizable compound and urethane resin particles were as shown in Table 2. The ion-exchanged water was added in an amount of parts by mass obtained by subtracting the total parts by mass of the above-described materials other than the ion-exchanged water from 100 parts by mass, when the total parts by mass of all the above-described materials including the ion-exchanged water was 100 parts by mass (i.e., balance).

### Preparation of Inks 23 to 28, 30 to 32

Inks 23 to 28 and Inks 31 and 32 were prepared in the same manner as Ink 22 except that the type and the content of the urethane resin particles and the type and the content of the radically polymerizable compound were changed as shown in Table 2.

Ink 30 was prepared in the same manner as Ink 24 except that the urethane resin particles were not used.

### Preparation of Inks 29, 33

0.8 parts by mass of TPO (2,4,6-trimethylbenzoyl-diphenyl-phosphine oxide) and 0.08 parts by mass of ITX (2-isopropylthioxanthone) were added, as polymerization initiators, to 8 parts by mass of the radically polymerizable compound 1. Ion-exchanged water preheated to 60°C was added with stirring and mixing at 60°C to prepare an aqueous dispersion. Subsequently, the aqueous dispersion was mixed with 0.1 parts by mass of BYK-349 available from BYK Japan KK as a silicone-based surfactant, 0.5 parts by mass of OLFINE E1010 available from Nissin Chemical Co., Ltd. as an acetylene glycol-based surfactant, and 5.0 parts by mass of propylene glycol as a water-soluble organic solvent.

Next, Ink 29 was prepared by mixing DISPERCOLL (trade name) U53 available from Sumika Covestro Urethane Co., Ltd., which is an aqueous dispersion of urethane resin particles, 0.5 parts by mass of BYK-199 available from BYK Japan KK as a silicone-based surfactant, 2.5 parts by mass of a black pigment (C.I. Pigment Black 7) as a colorant, and 15.5 parts by mass of propylene glycol as a water-soluble organic solvent, and adding and mixing so that the contents of the radically polymerizable compound and urethane resin particles were as shown in Table 2. The ion-exchanged water was added in an amount of parts by mass obtained by subtracting the total parts by mass of the above-described materials other than the ion-exchanged water from 100 parts by mass, when the total parts by mass of all the above-described materials including the ion-exchanged water was 100 parts by mass (i.e., balance).

Ink 33 was prepared in the same manner as Ink 29 except that the urethane resin particles were not used.

### Example 2-1

A white fabric (cotton) was used as a substrate, and 5 µL of Ink 22 was measured with a micropipette and dropped onto the substrate heated to 80°C on a hot plate. The substrate was heated for 10 minutes, and then irradiated with ultraviolet light at an irradiation dose of 7 J/cm² using an LED having a peak wavelength of 365 nm, to thereby form a cured film.

### Examples 2-2 to 2-8 and Comparative Examples 2-1 to 2-4

Cured films were formed in the same manner as in Example 2-1 except that the type of ink was changed as shown in Table 2.

### Image Density of Cured Film

The image density (ID value) of the cured film portion of cotton with the cured film formed in each of Examples and Comparative Examples was measured using a spectrophotometer ("eXact Advanced" available from X-Rite, Inc.). The results are shown in Table 2. In the present invention, an image density before scrubbing (ID₀) of 1.2 or more was evaluated as "pass", and that of less than 1.2 was evaluated as "fail".

### Evaluation of Washing Fastness of Cured Film (Washing Fastness 2)

The following evaluation was carried out for washing fastness 2. Specifically, the image density (ID₀) of the cured film portion of cotton with the cured film formed in each of Examples and Comparative Examples was measured as described above using a spectrophotometer ("eXact Advanced" available from X-Rite, Inc.). Thereafter, while the cured film was wetted with water in a water tank, the cured film was scrubbed by reciprocating a separate cotton cloth provided for scrubbing 60 times on the cured film, and the image density (ID₁) of the cured film portion after scrubbing was measured in the same manner.

The image density before scrubbing (ID₀) and the image density after scrubbing (ID₁) were substituted into the following equation (1) to calculate the percentage change in image density (ΔID). A ΔID of less than 40% was evaluated as "○ (good)", and a ΔID of 40% or more was evaluated as "× (poor)". The results are shown in Table 2.

In Comparative Example 2-3, the image density (ID₀) before scrubbing was low, and the initial image density was unacceptable; therefore, washing fastness 2 was not evaluated. $ΔID = \left|\left[\left({ID}_{1}-{ID}_{0}\right)/{ID}_{0}\right]\right| \times 100$

**[Table 2]**

| | | Ink No. | Content in ultraviolet-curable Ink (mass%) | | | | Cured film | | | |
|---|---|---|---|---|---|---|---|---|---|---|
| | | | Radically polymerizable compound | | Urethane resin particles | | ID value | | | Washing fastness 2 |
| | | | Type | Content | Type | Content | Before scrubbing (ID₀) | After scrubbing (ID₁) | Percentage change (ΔID) | |
| Example | 2-1 | 22 | Radically polymerizable compound 1 | 8 | DISPERCOLL^{®} U53 | 2 | 1.87 | 1.35 | 28% | ○ |
| | 2-2 | 23 | Radically polymerizable compound 1 | 8 | IMPRANIL^{®} DL3040 | 2 | 2.02 | 1.47 | 27% | ○ |
| | 2-3 | 24 | Radically polymerizable compound 1 | 10 | IMPRANIL^{®} DL3040 | 0.5 | 1.92 | 1.45 | 24% | ○ |
| | 2-4 | 25 | UCECOAT^{®} UC7655 | 8 | DISPERCOLL^{®} U53 | 2 | 1.52 | 1.05 | 31% | ○ |
| | 2-5 | 26 | UCECOAT^{®} UC7788 | 8 | DISPERCOLL^{®} U53 | 2 | 1.49 | 1.08 | 28% | ○ |
| | 2-6 | 27 | Beamset^{®} EM-90 | 8 | DISPERCOLL^{®} U53 | 2 | 1.87 | 1.43 | 24% | ○ |
| | 2-7 | 28 | Beamset^{®} EM-94 | 8 | DISPERCOLL^{®} U53 | 2 | 1.77 | 1.64 | 7% | ○ |
| | 2-8 | 29 | Radically polymerizable compound 1 | 8 | DISPERCOLL^{®} U53 | 2 | 1.81 | 1.57 | 13% | ○ |
| Comparative Example | 2-1 | 30 | Radically polymerizable compound 1 | 10 | - | 0 | 2.02 | 0.83 | 59% | × |
| | 2-2 | 31 | Radically polymerizable compound 1 | 8 | Takelac^{®} W-605 | 2 | 1.83 | 0.82 | 55% | × |
| | 2-3 | 32 | NK Ester^{®} A-GLY-20E | 8 | DISPERCOLL^{®} U53 | 2 | 1.08 | - | - | - |
| | 2-4 | 33 | Radically polymerizable compound 1 | 8 | - | 0 | 1.81 | 1.06 | 41% | × |

The results shown in Table 2 indicated that the ultraviolet-curable ink using the ultraviolet-curable composition of the present invention provides a cured film having good washing fastness.

In contrast, in Comparative Examples 2-1 and 2-4, in which urethane resin particles were not contained, and in Comparative Example 2-2, in which urethane resin particles having an undetected Tg were used, poor washing fastness was exhibited.

In Comparative Example 2-3, the radically polymerizable compound is not present in the form of particles in the ink, but is dissolved in the solvent. Therefore, the image density (ID₀) was already low before scrubbing, resulting in a faint image, and the ink was unsuitable for practical use.

As described above, the ultraviolet-curable ink of the present invention can be prepared by adding a colorant to the ultraviolet-curable composition of the present invention. It is considered that even an ultraviolet-curable composition to which a colorant is not added can provide the same effect as that of the ultraviolet-curable inks presented in the Examples.

Although the present invention has been described in detail with reference to specific embodiments, it will be apparent to those skilled in the art that various modifications can be made without departing from the spirit and scope of the present invention.

The present application is based on JP 2023-195828 filed on November 17, 2023, which is incorporated by reference in its entirety.

## Claims

1. An ultraviolet-curable composition comprising at least
a radically polymerizable compound;
a polymerization initiator; and
a solvent, wherein
the radically polymerizable compound is free from an emulsion polymer and is present in the form of particles,
the ultraviolet-curable composition further comprises resin particles having a urethane skeleton, and
the resin particles having a urethane skeleton are free from a polymerizable functional group and have a glass transition temperature of -10°C or lower.

2. An ultraviolet-curable composition comprising:
a radically polymerizable compound;
resin particles having a urethane skeleton;
a polymerization initiator;
a surfactant; and
a solvent, wherein
the radically polymerizable compound is present in the form of particles,
the resin particles having a urethane skeleton are free from a polymerizable functional group and have a glass transition temperature of -10°C or lower, and
the ultraviolet-curable composition comprises a silicone-based surfactant as the surfactant.

3. The ultraviolet-curable composition according to claim 1 or 2, wherein the radically polymerizable compound contains a (meth)acrylate.

4. The ultraviolet-curable composition according to claim 1 or 2, wherein a content of the resin particles having a urethane skeleton is 0.1 mass% or more and 10 mass% or less relative to a total mass of the ultraviolet-curable composition.

5. The ultraviolet-curable composition according to claim 1 or 2, wherein a content of the radically polymerizable compound is 5 mass% or more and 20 mass% or less relative to a total mass of the ultraviolet-curable composition.

6. The ultraviolet-curable composition according to claim 1 or 2, wherein the resin particles having a urethane skeleton have an average particle size of 10 nm or more and 250 nm or less.

7. The ultraviolet-curable composition according to claim 1 or 2, wherein the radically polymerizable compound has a urethane bond.

8. The ultraviolet-curable composition according to claim 1 or 2, wherein the solvent contains water.

9. The ultraviolet-curable composition according to claim 8, wherein the solvent further contains a water-soluble organic solvent, and a mass ratio of water to the water-soluble organic solvent (water:water-soluble organic solvent) is 1:0.05 to 1:1.5.

10. The ultraviolet-curable composition according to claim 1 or 2, wherein a concentration of a total solid content other than the solvent is 5 mass% or more and 23 mass% or less.

11. The ultraviolet-curable composition according to claim 1 or 2, wherein the composition is for an inkjet ink.

12. A method for producing a cured product, the method comprising:
applying or printing the ultraviolet-curable composition described in claim 1 or 2 onto a surface of a substrate; and
then irradiating the substrate with an active energy ray.

13. A cured product produced by curing the ultraviolet-curable composition described in claim 1 or 2.

14. An ultraviolet-curable ink comprising at least
a radically polymerizable compound;
a polymerization initiator;
a colorant; and
a solvent, wherein
the radically polymerizable compound is free from an emulsion polymer and is present in the form of particles,
the ultraviolet-curable ink further comprises resin particles having a urethane skeleton, and
the resin particles having a urethane skeleton are free from a polymerizable functional group and have a glass transition temperature of -10°C or lower.

15. An ultraviolet-curable ink comprising:
a radically polymerizable compound;
resin particles having a urethane skeleton;
a polymerization initiator;
a surfactant;
a colorant; and
a solvent, wherein
the radically polymerizable compound is present in the form of particles,
the resin particles having a urethane skeleton are free from a polymerizable functional group and have a glass transition temperature of -10°C or lower, and
the ultraviolet-curable ink comprises a silicone-based surfactant as the surfactant.

16. The ultraviolet-curable ink according to claim 14 or 15, wherein the radically polymerizable compound contains a (meth)acrylate.

17. The ultraviolet-curable ink according to claim 14 or 15, wherein a content of the resin particles having a urethane skeleton is 0.1 mass% or more and 10 mass% or less relative to a total mass of the ultraviolet-curable ink.

18. The ultraviolet-curable ink according to claim 14 or 15, wherein a content of the radically polymerizable compound is 5 mass% or more and 20 mass% or less relative to a total mass of the ultraviolet-curable ink.

19. The ultraviolet-curable ink according to claim 14 or 15, wherein the resin particles having a urethane skeleton have an average particle size of 10 nm or more and 250 nm or less.

20. The ultraviolet-curable ink according to claim 14 or 15, wherein the radically polymerizable compound has a urethane bond.

21. The ultraviolet-curable ink according to claim 14 or 15, wherein the solvent contains water.

22. The ultraviolet-curable ink according to claim 21, wherein the solvent further contains a water-soluble organic solvent, and a mass ratio of water to the water-soluble organic solvent (water:water-soluble organic solvent) is 1:0.05 to 1:1.5.

23. The ultraviolet-curable ink according to claim 14 or 15, wherein a concentration of a total solid content other than the solvent is 5 mass% or more and 23 mass% or less.

24. The ultraviolet-curable ink according to claim 14 or 15, wherein the ink is for inkjet printing.

25. A method for producing a printed matter, the method comprising:
applying or printing the ultraviolet-curable ink described in claim 14 or 15 onto a surface of a substrate; and
then irradiating the substrate with an active energy ray.

26. A printed matter produced by curing the ultraviolet-curable ink described in claim 14 or 15.
